# EUROPÄISCHE PATENTSCHRIFT

(11) **EP 4 256 833 B1**
(45) Veröffentlichungstag und Bekanntmachung des Hinweises auf die Patenterteilung: **14.01.2026**
(21) Anmeldenummer: 22712876.6
(22) Anmeldetag: 28.02.2022
(51) Int. Cl.: H04W 12/122, B60R 25/24, G07C 9/00, H04W 12/08, H04W 12/126, H04W 12/61, H04W 12/79

(54) **ERKENNUNG VON ANGRIFFEN AUF FUNKAUTORISIERUNGSSYSTEME**
DETECTION OF ATTACKS ON RADIO AUTHORIZATION SYSTEMS
DÉTECTION D'ATTAQUES SUR DES SYSTÈMES D'AUTORISATION RADIO

(43) Veröffentlichungstag der Anmeldung: 11.10.2023
(73) Patentinhaber: Lambda: 4 Entwicklungen GmbH, 22299 Hamburg (DE)
(72) Erfinder: REIMANN, Rönne, 22769 Hamburg (DE)
(74) Vertreter: Raffay & Fleck
(86) Internationale Anmeldenummer: PCT/EP2022/055016
(87) Internationale Veröffentlichungsnummer: WO 2023/160828

(56) Entgegenhaltungen:
- EP-A1- 3 564 703
- WO-A1-2020/229294
- US-A1- 2021 166 509
- US-A1- 2021 266 747

## Beschreibung

Die Erfindung betrifft ein neues Konzept für sichere Funkautorisierungssysteme hinsichtlich einer Feststellung eines Angriffs auf das Funkautorisierungssystems, insbesondere für Zugangsbeschränkungssysteme, beispielsweise zur Sicherung von Funkschlüsseln, beispielsweise für Automobile.

Funkautorisierungssysteme und/oder Zugangsbeschränkungssysteme finden in der heutigen Zeit auf vielerlei Gebieten Anwendung. Beispielsweise ist heutzutage nahezu jedes Automobil mit einem kontaktlosen Zugangsbeschränkungssystem ausgestattet mit dessen Hilfe der Besitzer des Automobils dieses per Funkautorisierung öffnen und verschließen kann. Ferner werden Funkautorisierungssysteme beispielsweise auch im Bereich der drahtlosen Netzwerktechnologie und angrenzenden Bereichen im hohen Umfang genutzt. Mittels solcher Funkautorisierungs- und/oder Zugangsbeschränkungssysteme soll in der Regel der unbefugte Zugang Dritter unterbunden werden. Nicht selten sollen hierdurch nicht unerhebliche finanzielle Gegenwerte, wie beispielsweise ein Automobil, oder, insbesondere sensible, Daten, z.B. in Drahtlosnetzwerken, oder Ähnliches vor dem unbefugten Zugang Dritter geschützt werden.

Funkautorisierungssysteme, Zugangsbeschränkungsvorrichtungen und/oder Zugangsbeschränkungssysteme können beispielsweise eingerichtet sein, eine Freigabe, beispielsweise eines Zugangs insbesondere durch ein Zugangskontrollmittel und/oder mittels eines Zugangskontrollmittels, zu steuern, kontrollieren und/oder gewähren. Zugang umfasst dabei insbesondere einen Zutritt, ein Aktivieren, ein Deaktivieren und/oder ein Öffnen, Insbesondere wird in der Regel der Zugang, der Zutritt, das Aktivieren, Deaktivieren und/oder das Öffnen nur gewährt, wenn nach Durchführung eines Autorisierungsversuchs, gegebenenfalls nach mehrmaliger Wiederholung eines Autorisierungsversuchs, eine Autorisierung erfolgreich durchgeführt wurde und insbesondere keine oder nur maximal einer vorbestimmte Anzahl von fehlerhaften Autorisierungsversuchen vorliegt.

In der Regel wird der Zugang, der Zutritt, das Aktivieren, Deaktivieren und/oder das Öffnen nur freigegeben (gewährt), wenn eine vordefinierte Authentifizierungsanforderung erfüllt ist, beispielsweise ein korrektes Passwort eingegeben wird oder wenn beispielsweise ein Zertifikat gültig und/oder im Zugangssystem als zulässig gekennzeichnet ist und/oder ein Schlüssel in ein Schloss schließt. Aber auch andere Authentifizierungsanforderungen wie die korrekte Antwort auf eine Frage oder einen Code können genutzt werden. So kann von einer Zugangsbeschränkungsvorrichtung ein Code ausgesendet werden, der mittels eines Autorisierungsmittels verarbeitet wird und kann das Ergebnis an die Zugangsbeschränkungsvorrichtung übermittelt und dort geprüft, insbesondere mit einer vorbestimmten Angabe vergleichen, werden und die Freigabe vom Ausgang der Prüfung abhängig gemacht sein.

Eine Authentifizierungsanforderung kann eine Vielzahl von Authentifizierungsteilanforderungen beinhalten, wie beispielsweise bei Multi-Faktor-Authentifizierungen.

Als Zugang kann insbesondere neben einem Zutritt zu einem Bereich, im Sinne der möglich Bewegung eines Gegenstandes und/oder einer Person in diesen Bereich, beispielsweise das innere eines Raumes oder eines Fahrzeuges, auch der Zugang zu einer Funktion, insbesondere auch im Sinne von Aktivierung oder Freigabe einer Funktion, verstanden werden, so beispielsweise der Zugang zu der Funktion des Anlassens oder Startens einer Fahrzeuges oder der Zugang zu der Funktion "Kaffee ausgeben" einer Kaffeemaschine. Entsprechend sind Zugangskontrollsysteme insbesondere nicht nur solche, die nur ein Zutritt in einen Bereich, im Sinne der möglich Bewegung eines Gegenstandes und/oder einer Person in diesen Bereich hinein, kontrollieren, beschränken, gewähren und/oder schützen, sondern insbesondere auch solche, die den Zugang zu einer Funktion, insbesondere auch im Sinne von Aktivierung oder Freigabe einer Funktion, kontrollieren, beschränken, gewähren und/oder schützen.

Als Zugangskontrollsystem kommen insbesondere Autorisierungssysteme, beispielsweise zur Anmeldung in Computersystemen, beispielsweise mittels eines Passworts und/oder eines Zertifikats, oder auch klassische Zugangskontrollsysteme wie Schlösser, Schranken, Türen und/oder Schleusen und/oder solche zur Freigabe von Funktionen, beispielsweise einer Servicestation, wie Kaffeeautomat, in Frage. Insbesondere kann es sich dabei um Türen und/oder Zündschlösser und/oder Anlasser eines Fahrzeuges (z.B. Kraftfahrzeug, Flugzeug, Schiff oder autonomes Taxi - sowie aller denkbaren weiteren) handeln. Ebenfalls kann es einen Zugang zu einer beliebigen Servicestation sichern und/oder freigeben (Geldautomat, Telefon, Kaffeeautomat - die Liste ist beliebig erweiterbar). Als Autorisierungsmittel kommen beispielsweise Mobiltelefon, Schlüssel, Zertifikate und/oder Eingabesysteme zur Eingabe von Passwörtern in Frage.

Häufig ist die Gewährung des Zugangs auch oder nur davon abhängig, ob sich das Autorisierungsmittel oder das zweite Objekt in der Nähe des ersten Objektes befindet, wobei der Zugang insbesondere nur bei Unterschreitung eines vorbestimmten Abstandes gewährt wird. Der Abstand kann auch durch eine Empfangsleistung/-stärke definiert sein. Zur Bestimmung der Entfernung sind auch phasenbasierte Entfernungsmessung und Laufzeitanalysen bekannte Mittel. Alle diese Methoden sind durch einen "Man in the Middle" oder "Relay attack" angreifbar. Am sichersten ist die Laufzeitanalyse RTT (round trip time) gegen einen solchen Angriff, daher wird dieser bevorzugt verwendet, wenn die Sicherheit hoch sein soll. Eine Laufzeitanalyse wird in Bandbreiten begrenzten Funksystemen am einfachsten über eine Zeitanalyse der ankommenden Symbole der Nachrichten oder andere Merkmale in dem Funksignal gelöst. Insbesondere eine Laufzeitanalyse wird häufig "early-detect/late-commit" angegriffen. Insbesondere um diesen und ähnliche Angriffe zu erkennen kann die Erfindung eingesetzt werden.

Es sind zahlreiche Angriffsmöglichkeiten auf funkbasierte Autorisierungssystem, Zugangsbeschränkungsvorrichtungen und/oder Zugangsbeschränkungssysteme, insbesondere Relay-Angriffe, durch Dritte auf solche Systeme, insbesondere auf Systeme zur Zugangsbeschränkung in Automobilen und/oder Kraftfahrzeugen oder im Bereich der Zugangsbeschränkung in Funknetzwerken, bekannt, wie beispielsweise der sog. "Range Extender" oder "Man-In-The-Middle"-Angriff. Ein solcher Angriff kann durch eine Laufzeitanalyse (RTT round trip time) des Signals erkannt werden. Diese Laufzeitanalyse kann z.B. durch Messung der Zeiten wann die einzelnen Symbole einer Nachricht genau ankommen vorgenommen werden. Allerdings kann der Angreifer z.B. mit einem "early-detect/late-commit" Angriff diese Zeitmessung versuchen so zu manipulieren, dass der "Man in the middle" nicht auffällt. Ein (Angriffs-)Signal eines solchen Dritten ist hierbei, wie der Erfinder erkannt hat, in der Regel in zeitlich Hinsicht kompakter als ein originäres Signal, weist insbesondere einen steileren Anstieg, insbesondere hinsichtlich der Signalamplitude, und/oder weist eine Abweichung hinsichtlich der (zeitlichen) Änderung der Phase des Signals auf.

Bisherige Konzepte für sichere Funkautorisierungssysteme beruhen vor allem darauf, einen Angriff möglichst effizient zu verhindern. Hierzu wird das für einen Zugang nötige Freigabesignal möglichst komplex gestaltet, sodass sich ein Angriff möglichst schwer gestaltet. Verwendung hierbei finden beispielsweise breitbandige Signale bzw. Systeme oder aber Systeme mit zahlreichen verschiedenen Freigabesignale und/oder Abfolgen derer und/oder besonders komplex codierte bzw. zu berechnende Freigabesignale. So ist es beispielsweise aus der DE 10 027 380 A1 bekannt, auf Grund einer Anfrage ein breitbandiges Signal zu erzeugen und am Empfänger zu überprüfen, ob das empfangene Signal der auf der Anfrage beruhenden Erwartung entspricht. Auch aus der US 2004/0 137 877 A1, der WO 2000 005,696 A2 und der WO 2000 012,846 A1 ist ein Dualtonverfahren oder ein Verfahren mit Abfolgen von Dualtönen bekannt, bei dem am Empfänger geprüft wird, ob die Dualtöne oder deren Abfolge mit der erwarteten Reinheit empfangen wird. Dazu verfügt der Empfänger über die Möglichkeit, das empfangene Signal mit einer großen Bandbreite oder mit veränderbaren Filtern zu empfangen, um dies zu analysieren. So soll eine durch ein Relais erzeugte Störung der 3. Ordnung durch Mischen der Dualtöne erkannt werden. Die bekannten Systeme sind dementsprechend aufwendig bzw. technisch anspruchsvoll. Entsprechend teure Systemkomponenten, wie beispielsweise ein Breitbandempfänger, oder eine vergleichsweise leistungsstarke Recheneinheit sind in der Regel von Nöten, wodurch diese Systeme, Verfahren und/oder Komponenten ressourcenintensiv sind. Zudem ist es mit fortschreitender Technik meist recht schnell möglich, zunächst als sicher angesehene Systeme auch in der Praxis zu umgehen, weil beispielsweise mehr Rechenleistung zu geringem Preis auf engem Raum zur Verfügung steht, als dies bei der Konzeptionierung der Systeme gegeben war.

Aus der DE 10 2017 001 092 A1 ist es zudem bekannt, an einem Auto und an einem Schlüssel jeweils Spektren der dort jeweils zu empfangenen Umgebungsspektren aufzunehmen und diese zu vergleichen, um daraus zu schließen, ob sich beide in etwa am selben Ort aufhalten, um Relaisangriffe zu verhindern.

Ein weiteres Konzept für ein sicheres Übertragungssystem ist aus der EP 3 564 703 A1 bekannt.

Dementsprechend ist Aufgabe der Erfindung ein Konzept für sichere Funkautorisierungssysteme und/oder Zugangsbeschränkungssysteme aufzuzeigen, welches auch in simpleren Systemen verwendet werden kann und sich insbesondere mit den zahlreichen bekannten Lösungen, so beispielsweise komplexen Freigabesignalen, kombinieren lässt, und welches insbesondere konzeptionell nicht von der Annahme beschränkter Rechenleistung abhängig ist.

Gelöst wird diese Aufgabe durch ein Konzept, in welchem nicht die unmittelbare Verhinderung eines Angriffs im Mittelpunkt steht, sondern die Feststellung, ob es sich bei einem Signal um ein originäres Signal des Funkautorisierungssystems handelt oder nicht, und zwar bezogen auf das Signal bzw. dessen zeitliche Form und/oder Ausgestaltung selbst und nicht (nur) bezogen auf den im Signal codierten Inhalt. Basierend auf dieser Feststellung kann beispielsweise eine Entscheidung getroffen werden, ob das Signal beachtet und weiter geprüft oder verworfen wird und somit ggf. ein Zugang erteilt oder verwehrt wird.

Dabei besteht das Problem, dass ein gesendetes Signal auf dem Weg zum Empfänger verändert wird. Der Erfinder hat festgestellt, dass es daher problematisch ist, mit absoluten Größen in Bezug auf die Beurteilung des Signals zu arbeiten. Bessere Ergebnisse lassen sich, auch schon in der WO 2020/229294 A1. durch relative Größen erreichen. Noch vorteilhafter, als sich auf vorausgehende Abschnitte eines Signals, insbesondere in einem anderen Slot, Symbol oder Chip zu beziehen, ist es, wie der Erfinder nun festgestellt hat, relative Größen in Bezug auf die aktuell untersuchte Signaländerung zu verwenden. So kann insbesondere eine Flanke eines Signals selbst an Hand von aus dieser Flanke gewonnen Bezugsgrößen beurteilt werden.

Das erfindungsgemäße Konzept umfasst ein Verfahren zur Entscheidung über die Herbeiführung einer Freigabe in einem Funkautorisierungssystem basierend auf mindestens einer Änderung mindestens einer Signalkenngröße im Zeitverlauf eines empfangenen Eingangssignals nach Anspruch 1. Die Ansprüche 2 bis 11 beschreiben vorteilhafte Weiterbildungen des erfindungsgemäßen Verfahrens. Ferner wird die Aufgabe durch ein erfindungsgemäßes Funkautorisierungssystem nach Anspruch 12 und dessen vorteilhafte Weiterbildungen nach den Ansprüchen 13 und 14 15 gelöst.

Zur Lösung der erfindungsgemäßen Aufgabe ist ein Funkautorisierungssystem, aufweisend mindestens ein erstes und ein zweites Objekt, eingerichtet, durch ein Freigabesignal des zweiten Objekts an das erste Objekt, eine Freigabe herbeizuführen, insbesondere einen Zugang freizugeben und/oder zu gewähren. Hierbei wird mittels des Funkautorisierungssystem eine Vielzahl von Symbolen und/oder Chips mit einer ersten Symbol- oder Chiprate in mindestens einem ersten analogen Datensignal codiert von dem ersten zu dem zweiten Objekt übertragen. Das erste sowie zweite Objekt werden hierbei jeweils durch einen Sender und/oder Empfänger, insbesondere je einen Transceiver, ausgebildet, so zum Beispiel durch einen Sender oder Transceiver in einem (Funk-)Schlüssel eines Automobils sowie einen Empfänger oder Transceiver einer Funkschließeinheit des Automobils in einem Funkzugangssystem bzw. Funkautorisierungssystem. Unter dem Herbeiführen einer Freigabe wird in diesem Zusammenhang beispielsweise das Öffnen, Entriegeln und/oder Starten und/oder das Ermöglichen des Öffnens oder Startens des entsprechenden Automobils nach Aussenden des Freigabesignals an das Automobil durch Betätigung des (Funk-)Schlüssels sowie Empfangens des Freigabesignals an der Funkschließeinheit des Automobils verstanden. Andere Beispiele für Freigaben können beispielsweise das Gewähren eines Zugangs zu einem Funknetzwerk, oder aber das Gewähren eines Zugangs zu einer Funktion, wie beispielsweise der Funktion "Kaffee ausgeben" einer Kaffeemaschine sein. Prinzipiell ist als Freigabe jede Gewährung eines Zugangs zu einem Gegenstand; Ort, Bereich oder Räumlichkeit; und/oder einer Funktion denkbar, welche zum Schutz gegenüber einem nicht-autorisiertem Zugang einer Authentifizierung zur Gewährung des Zugangs bedarf, verstanden werden.

Das Freigabesignal kann aber auch nur einen Teil der notwendigen Freigabemaßnahmen darstellen, so kann ein weiterer Bestandteil der Authentifizierung notwendig sein, um beispielsweise die Autotür zu öffnen, wobei dies bevorzugt aber nicht der Fall ist. Beispielsweise kann dazu auch ein weiteres Signal bzw. eine Signalfolge, insbesondere auch bei unterschiedlichen Frequenzen oder in verschiedenen Frequenzbanden notwendig sein, wobei dies bevorzugt aber ebenfalls nicht der Fall ist. Auch kann es beispielsweise erforderlich sein, dass erfindungsgemäße Verfahren mehrfach also mit mehreren, aufeinander folgenden und ggf. unterschiedlichen Freigabesignalen durchzuführen, um letztendlich beispielsweise ein Schloss zu öffnen. Erfindungsgemäß handelt es sich vorteilhafterweise in jedem Fall bei dem Freigabesignal, welches in einem erfindungsgemäßen Verfahren betrachtet wird, insbesondere nicht um ein Mehrtonsignal.

Ein Freigabesignal kann ferner auch Teil einer Signalschleife sein, also eines ein oder mehrmaligen Hin- und Zurücksenden eines oder des Signals zwischen erstem und zweitem Objekt. So kann beispielsweise vom ersten Objekt ein erstes Signal beinhaltend eine erst Nachricht an das zweite Objekt gesendet werden und das zweite Objekt mit einem zweiten Signal, insbesondere Freigabesignal, an das erste Objekt reagieren. Dabei ist das zweite Signal, insbesondere die in ihm übermittelte zweite Nachricht, insbesondere abhängig von der ersten Nachricht des ersten Signals. Die erste und/oder zweite Nachricht kann beispielsweise verschlüsselt sein und/oder einen (Symbol-)Code beinhalten. So kann das zweite Objekt zunächst den (ggf. verschlüsselten) (Symbol-)Code der ersten Nachricht entschlüsseln und unter Verwendung des ersten (Symbol-)Codes einen zweiten (Symbol-)Code erzeugen, diesen (ggf. verschlüsselt) im zweiten Signal senden. Bevorzugt wird das Senden des ersten Signals durch ein Initialisierungssignal des zweiten an das erste Objekt ausgelöst. In diesem Fall sollte sowohl das erste als auch das zweite Objekte so eingerichtet sein, dass die Objekte jeweils als Sender und Empfänger dienen können.

Freigabesignale können beispielsweise darüber hinaus codiert und/oder verschlüsselt sein. Insbesondere wird ferner eine entsprechende Codierung und/oder Verschlüsselung eines Eingangssignals in dem Funkautorisierungssystem insofern untersucht, ob diese der Codierung und/oder Verschlüsselung jener eines Freigabesignals entspricht und/oder ob der innerhalb der Codierung und/oder Verschlüsselung eines Freigabesignals zu findende Inhalt beziehungsweise (Symbol)-Code im Eingangssignal ebenfalls zu finden ist.

Ferner können Freigabesignale nicht nur eine entsprechende Codierung und/oder Verschlüsselung und/oder einen entsprechenden Inhalt und/oder (Symbol-)Code aufweisen, sondern weisen darüber hinaus zusätzlich mindestens eine vorbestimmte Änderung mindestens einer Signalkenngröße im Zeitverlauf des Signals auf, die bestimmte Anforderungen erfüllt (die entsprechenden Anforderungen werden im späteren Verlauf der Beschreibung näher erläutert).

Insbesondere ist und/oder wird das mindestens eine Freigabesignal ausschließlich auf Basis von im Funkautorisierungssystem vorbestimmten Daten und/oder auf Basis von Signalen des Funkautorisierungssystem durch das Funkautorisierungssystem, insbesondere basierend auf der mindestens eine vorbestimmte Änderung der mindestens einen Signalkenngröße im Zeitverlauf des/der Freigabesignal(e), bestimmt. Unter einer Änderung der Signalkenngröße(n) im Zeitverlauf ist hierbei insbesondere eine Entwicklung der Signalkenngröße(n) über die Zeit für ein einzelnes Signal, insbesondere einer einzelnen Flanke des Signals, zu verstehen.

Insofern kann die Änderung der Signalkenngröße(n) im Zeitverlauf insbesondere eine zeitliche Amplitudenänderung und/oder Phasenänderung sein/darstellen. Beispielsweise kann ein Signal, insbesondere eine einzelne Signalflanke, insbesondere abschnittsweise einen nach Zeit aufgelösten näherungsweise linearen Anstieg seiner Amplitude beim Aussenden und des Signals aufweisen, welcher beim Empfang in analoger Weise festgestellt werden kann. Auch kann die Abhängigkeit zwischen Anstieg der Amplituden und Zeit von einem linearen Zusammenhang abweichen. Insbesondere können sich Abhängigkeiten analog zu einer Gaußfunktion ergeben, in welcher die Zu- oder Abnahme der Amplitude - bevorzugt wird die Zunahme betrachtet - über die Zeit gerade nicht konstant ist und selbst eine Änderung im Zeitverlauf über das Signal bzw. die Signalflanke erfährt. Freigabesignale weisen insofern eine vorbestimmte aber nicht zwingend konstante Änderungsrate, d.h. insbesondere eine definierte Steigung in der Abhängigkeit der Signalkenngröße(n) gegenüber der Zeit, auf, welche insbesondere im Fall von einem zeitlich linearen Signalaufbau konstant sind bzw. bei abweichen Funktionsformen - bspw. gaußförmigen Kurven - selber eine Abhängigkeit von der Zeit zeigen, insofern im Zeitverlauf gerade nicht konstant sind. Wird also ein Freigabesignal durch das Funkautorisierungssystem auf Basis von vorbestimmten Daten bestimmt, so weist ein solches Freigabesignal eine vordefinierte zeitliche Form hinsichtlich der mindestens einen Signalkenngröße auf, insbesondere hinsichtlich Amplitude und/oder Phase bzw. deren zeitlicher Zu- und/oder Abnahme und/oder Entwicklung über die Zeit, in welcher ein entsprechendes Signal versendet wird bzw. werden kann, welche insbesondere von den vorbestimmten Daten abhängt bzw. anhängen.

Das/die Freigabesignal(e) ist ferner Teil des mindesten einen ersten analogen Datensignals und in dem/den Freigabesignal(en) ist eine Information bzw. sind Informationen, insbesondere digital, in einer Mehrzahl von Symbolen und/oder Chips codiert. So kann das/die Freigabesignal(e) nach einer auf dem Schlüssel gespeicherten Anweisung erzeugt werden und/oder auf einem vom Funkautorisierungssystem erzeugten und vom Schlüssel empfangenen Signal basierend erzeugt werden. Insbesondere werden zur Erzeugung des Freigabesignals bzw. der Freigabesignale keine äußeren Informationen genutzt, welche nicht auf im Funkautorisierungssystem vorbestimmt gespeicherten Daten beruhen oder auf Basis solcher durch das Verfahren und/oder das Funkautorisierungssystem erzeugt werden. Insbesondere basiert das Freigabesignal bzw. basieren die Freigabesignale nicht auf dem Funkautorisierungssystem fremden Signalen und/oder nicht auf Umgebungssignalen.

Vorteilhaft ist insbesondere die Möglichkeit das Konzept mit standardisierten Datenübertragungssignalen als Freigabesignalen, insbesondere bekannter System, wie beispielsweise 4G, 5G, Bluetooth und/oder WLAN, verwenden zu können, wobei bevorzugt insbesondere keine Dualtöne und/oder kontinuierliche Wellen (continuous waves) und/oder keine eigens für dieses Verfahren vorgesehene Signale verwendet werden. Vielmehr soll anhand der standardisierten Datenübertragungssignale eine Erkennung eines möglichen Angriffs durchgeführt werden.

Insbesondere sind die verwendeten Freigabesignale solche, die, insbesondere zeitgleich, auch zur digitalen Datenübertragung von Daten, insbesondere Nutzdaten, insbesondere in Form von Chips und/oder Symbolen, verwendet werden. Insbesondere werden die Signale eines solchen Übertragungssystems für die Erfindung genutzt, bevorzugt insbesondere die Signale eines Bluetooth-Systems. Insbesondere sind die Objekte Transceiver eines digitalen Datenübertragungssystems, bevorzugt insbesondere arbeitend mit QAM. Insbesondere sind die Freigabesignale Signale, die, insbesondere zeitgleich, zur digitalen Datenübertragung genutzt werden, insbesondere mittels der Übertragung von Chips und/oder Symbolen, insbesondere Signale eines digitalen, insbesondere QAM, ASK, FSK, GFSK, PSK, QPSK, QAM, APSK und/oder OFDM basierten, Datenübertragungssystem, insbesondere eines Chip- und/oder Symbolsynchronisierten digitalen Datenübertragungssystems.

Die Verwendung eines Freigabesignals mit darin codierten digitalen Signalen hat den weiteren Vorteil, dass die im Freigabesignal durch die darin codierten Informationen enthaltenden Flanken zusammen mit einem weiteren, insbesondere codierte digitale Informationen tragenden, Signal genutzt werden können, um eine Signalrundlaufzeitmessung zwischen erstem und zweitem Objekt sehr genau zu bestimmen. Dies ermöglicht eine weitere Absicherung des erfindungsgemäßen Verfahrens und des Systems. Insbesondere ist das Verfahren und/oder das System zu einer solchen Bestimmung eingerichtet und/oder beinhaltet es/sie diese. So kann eine bestimmte Signalrundlaufzeit ebenfalls für eine Freigabeentscheidung berücksichtigt werden.

Insbesondere ist das Freigabesignal ein Einkanalsignal und insbesondere kein Dualtonsignal und/oder ein Signal
- mit zu jeder Zeit nur orthogonalen Trägerfrequenzen und/oder
- mit zu jeder Zeit nur einer Trägerfrequenz in einem Frequenzband aufweisend eine solche spektrale Breite und/oder dessen spektrale Breite so gewählt ist/wird, dass bei der Verstärkung des Freigabesignals keine Töne dritter Ordnung entstehen, und/oder
- mit zu jeder Zeit nur einer Trägerfrequenz in einem Frequenzband von mindestens 0,5 MHz, insbesondere mindestens 1 MHz, insbesondere symmetrisch um jeden Ton des Freigabesignals,
wobei das Freigabesignal insbesondere bevorzugt zu jeder Zeit nur eine Trägerfrequenz und/oder ausschließlich orthogonale Trägerfrequenzen aufweist.

Somit existiert vorteilhafterweise in jedem Frequenzband, insbesondere alle dieselbe aus den zuvor spezifizierten Frequenzbandbreiten gewählte spektrale Breite aufweisend, wobei die Frequenzbänder insbesondere symmetrisch um jeden Ton oder jede Frequenz des Freigabesignals angeordnet werden/sind, zu jeder Zeit nur ein Ton oder eine Frequenz im Freigabesignal und/oder es existieren vorteilhafterweise in jedem Frequenzband, insbesondere alle aufweisend eine der zuvor spezifizierten Breiten, wobei die Frequenzbänder insbesondere symmetrisch um jeden Ton oder jede Frequenz des Freigabesignals angeordnet werden/sind, zu jeder Zeit nur orthogonale Töne oder Frequenzen im Freigabesignal.

Insbesondere wird keine Zweiton-Messung durchgeführt. Vielmehr beruht das Verfahren darauf, dass ein Angreifer, beispielsweise bei einem "early-detect/- commit" Angriff, eine zeitliche Komprimierung des Signals und damit eine zeitlich schnellere Änderung der mindestens einen Signalkenngröße, insbesondere in Form eines schnelleren Amplitudenanstiegs und/oder einer schnelleren Phasenänderung des Signals durchführen muss, was durch das Verfahren erkannt wird. Dabei kann das Freigabesignals, insbesondere innerhalb einzelner Frequenzbänder, insbesondere innerhalb eines einzelnen Signals, insbesondere einer einzelnen Flanke eines einzigen Signals, insbesondere wie zuvor beschrieben ausgewählt werden. Dadurch lässt sich die Apparatur vereinfachen und Energie einsparen.

Nicht jedes am ersten Objekt empfangene Eingangssignal muss ein Freigabesignal sein, es kann sich beispielsweise auch um Angriffssignale Dritter handeln. Folglich kann der Ursprung des an dem ersten Objekt empfangenen Eingangssignals das zweite Objekt sein, insbesondere wenn es sich bei dem Eingangssignal um ein Freigabesignal handelt, oder von diesem abweichen, beispielsweise durch einen Angriff auf das Funkautorisierungssystem durch ein drittes, nicht zu dem Funkautorisierungssystem zugehöriges Objekt gegeben sein. Unter einem Angriff kann folglich beispielsweise der Versuch eines solchen dritten Objekts verstanden werden, auf das Funkautorisierungskonzept beziehungsweise auf die Kommunikation zwischen erstem und zweitem Objekt innerhalb eines solchen Funkautorisierungssystems einzuwirken, um beispielsweise einen unerlaubten beziehungsweise unautorisierten Zugang, beispielsweise zu einem Funknetzwerk oder Automobil zu erhalten.

Einen solchen Angriff gilt es, erfindungsgemäß zu erkennen. Hierzu wird in einem erfindungsgemäßen Verfahren nach Anspruch 1 mindestens eine Änderung mindestens einer Signalkenngröße im Zeitverlauf des an dem ersten Objekt empfangenen Eingangssignals verwendet, um festzustellen, ob das Eingangssignal ein Signal, insbesondere Freigabesignal, des Funkautorisierungssystems ist bzw. durch das Funkautorisierungssystem als Freigabesignal erkannt wird und/oder ob das Eingangssignal dem Funkautorisierungssystem fremdes Signal, insbesondere ein Signal eines dritten, nicht zu dem Funkautorisierungssystem zugehörigen Objekts, ist und/oder ob das Eingangssignal einen Angriff, insbesondere durch ein drittes, nicht zu dem Funkautorisierungssystem zugehörigen Objekt, darstellt.

Die betrachtete Signalkenngröße ist eine Amplitude und/oder eine Phase des Signals und/oder beinhaltet diese. Insofern wird ein empfangenes Eingangssignals hinsichtlich dessen Amplitude und/oder Phase in dessen Zeitverlauf, insofern hinsichtlich der zeitlichen Änderung der Amplitude und/oder Phase, durch das Funkautorisierungssystem betrachtet bzw. analysiert. Insbesondere wird hierbei betrachtet wie schnell die Amplitude des Signals eine Steigerung bzw. Abnahme erfährt bzw. sich die Phase des Signals ändert. Hierzu ist insbesondere nicht notwendig eine zeitliche Breite der Signale über das vollständige Signal oder einer Signalflanke oder die spektrale Breite des Signals zu bestimmen. Folglich wird insbesondere nicht die Zeit bzw. Dauer ermittelt, welche vom Zeitpunkt des Beginns des Aussendens bis zum Erreichen der maximalen Amplitude oder eines Schwellenwerts, respektive der Abnahme von der maximalen Amplitude zum vollständigen Abfall oder Abfall unter einen Schwellenwerts der Amplitude, benötigt wird.

Dabei zeigen Signale, welche keine Signale des Funkautorisierungssystem, insbesondere keine Freigabesignale, sind/darstellen, insbesondere Signale beispielsweise stammend aus einem "early-detect/-commit"-Angriff durch ein dem Funkautorisierungssystem fremdes Objekt, in der Regel einen deutlich schnelleren Anstieg der Signalamplitude bzw. eine deutlich schnellere Phasenänderung, weichen somit von einer zeitlichen Soll-Form der Signale des Funkautorisierungssystems, insbesondere von Freigabesignalen, gerade im Bereich der Signaländerung ab.

Innerhalb des erfindungsgemäßen Verfahrens gilt es, eben solche Abweichungen festzustellen. Die mindestens eine Signalkenngröße des Eingangssignals im Zeitverlauf wird demnach dahingehend verwendet, um anhand der ermittelten Abweichung festzustellen, ob das Eingangssignal von einem zweiten Objekt, folglich einem Teil des Funkautorisierungssystems, stammt und somit die Freigabe insbesondere durch einem autorisierten Nutzer erfolgt oder von einem dritten Objekt stammt und somit ein nicht-autorisierter Nutzer/ein nicht-autorisiertes Objekt versucht, sich Zugang, zu verschaffen. Es gilt, einen solchen Angrifft durch einen nicht-autorisiertes Objekt und/oder einen nicht-autorisierten Benutzer zu erkennen, um so die Freigabe eines Zugangs zu verhindern.

Hierzu werden beim Empfang des Eingangssignals Samplings der mindestens einen Signalkenngröße, insbesondere die jeweils aktuelle Amplitude und/oder Phase, des empfangenen Eingangssignals derart genommen, dass zumindest ein erstes Sampling zu einem ersten Zeitpunkt und ein zweites Sampling zu einem zweiten Zeitpunkt erfolgt. Die Samplings erfolgen hierbei insbesondere in einem vorbestimmten zeitlichen Abstand zwischen erstem und zweitem Zeitpunkt. Auch werden das erste und zweite Sampling an einem einzelnen Signal, ferner an der derselben bzw. einer einzigen Signalflanke genommen. Insbesondere wird hierzu der vorbestimmte zeitliche Abstand zwischen erstem und zweiten Sampling derart gewählt, dass ein Zeitintervall zwischen Beginn des Empfangs von einem Freigabesignal und Erreichen einer maximalen Amplitude dessen unterschritten wird, insbesondere weniger als 50%, insbesondere weniger als 25%, insbesondere weniger als 10% dessen beträgt. Insbesondere liegt der vorbestimmte zeitliche Abstand im Bereich von 1/16 bis 1/4 der Periode des Funksignals und/oder, insbesondere bei typischen Funkübertragungsprotokollen wie Bluetooth, im Bereich von 50ns bis 250ns.

Insbesondere werden der erste und zweite Zeitpunkt bzw. deren zeitlicher Abstand vorteilhafterweise derart gewählt, dass das erste und zweite Sampling in einem Bereich der untersuchten Signalflanke eines Freigabesignals und einem zeitlichen Abstand erfolgen, in welchem eine Änderung der mindestens einen Signalkenngröße von mindestens 10 Prozent, vorzugsweise mindestens 50 Prozent, insbesondere bezogen auf den größeren Werte, zwischen erstem und zweitem Sampling für ein Freigabesignal zu erwarten ist. Dazu können das erste und zweite Sampling mit Vorteil zu Zeitpunkten erfolgen, welche im mittleren Bereich der Signalflanke eines erwarteten Freigabesignals liegen, da in der Regel gerade im mittleren Bereich einer Signalflanke die Änderung der Signalkenngröße am größten ist. Bevorzugt wird als erfindungsgemäßer mittlerer Bereich einer Signalflanke insbesondere jener Bereich aufgefasst, in welchem die mindestens einen Signalkenngröße, insbesondere Amplitude, Phase und/oder Frequenz, im Bereich von 15 und 85 Prozent, insbesondere 25 und 75 Prozent, des von der Signalflanke abgedeckten und/oder abzudeckenden Spanne, beispielsweise des Frequenz-, Phasen- und/oder Amplitudenhubs der Signalflanke, beträgt. Deckt also die Flanke beispielsweise den Bereich von 2100 bis 2200 MHz ab, so läge der mittlere Bereich insbesondere von 2115 bis 2185 MHz, insbesondere von 2125 bis 2175 MHz.

Durch das mindestens eine erste Sampling wird mindestens ein erster Ist-Wert für die mindestens eine Signalkenngröße und durch das mindestens eine zweite Sampling mindestens ein zweiter Ist-Wert für die mindestens eine Signalkenngröße ermittelt. Bei den ermittelten Ist-Werten handelt es sich demnach um die zum Zeitpunkt des ersten bzw. zweiten Samplings jeweils vorliegenden Messwerte für die mindestens eine Signalkenngröße, bzw. die zu diesem Moment aktuelle Höhe der Signalamplitude des Signals und/oder eine entsprechende Phase des Signals zu ebenjenen Zeitpunkten. Die ermittelten Ist-Werte werden in der Folge mit mindestens einer Soll-Relation abgeglichen, wobei die mindestens eine Soll-Relation, insbesondere durch das Funkautorisierungssystem, ausschließlich basierend auf im Funkautorisierungssystem vorbestimmten Daten und/oder basierend auf Signalen des Funkautorisierungssystems, insbesondere anhand der vorbestimmten Änderung der mindestens einen Signalkenngröße im Zeitverlauf des Freigabesignals, bestimmt ist und/oder wird. Die Soll-Relation beschreibt insofern, wie die ermittelten Ist-Werte in Relation zueinanderstehen müssen bzw. müssten, wenn es sich um ein Freigabesignal und/oder ein Signal des Funkautorisierungssystem handelt bzw. damit es sich um ein solches bzw. solche handeln kann. Sie kann insbesondere in absoluten und/oder relativen Werten definiert sein. So kann die Soll-Relation beispielsweise angeben, um welchen Wert die Ist-Werte sich unterscheiden müssen oder in welchem Verhältnis bspw. eine Amplitude zwischen dem ersten und zweiten Sampling zu- oder abnehmen müsste bzw. welche Verhältnisse für ein Freigabesignal erwartet werden können.

In einer vorteilhaften Ausbildung des erfindungsgemäßen Verfahrens kann die Soll-Relation durch eine Soll-Erwartungswertspanne, insbesondere einen Soll-Erwartungswert, bestimmt werden/sein. Mit Vorteil kann die Soll-Erwartungswertspanne eine Soll-Wertspanne bzw. der Soll-Erwartungswert ein Soll-Wert für den im mindestens einen zweiten Sampling erwarteten zweiten Ist-Wert der mindestens einen Signalkenngröße, und/oder ein Soll-Verhältnis und/oder eine Soll-Differenz und/oder eine Soll-Änderungsrate zwischen der mindestens einen Signalkenngröße des mindestens einen ersten und des mindestens einen zweiten Samplings sein, insbesondere im Zeitintervall zwischen erstem und zweitem Zeitpunkt. Insofern kann die Soll-Relation als Soll-Erwartungswertspanne dahingehend ausgebildet sein, dass basierend zu einem jeden potentiellen Ist-Wert eine erwarteter Ist-Wert-Spanne für das zweite Sampling aus dem ersten Ist-Wert vorhergesagt werden kann bzw. ableitbar ist. Auch ist es denkbar, dass nicht eine entsprechende Absolutwertspanne für den zweiten Ist-Wert an sich, sondern die Änderung, insbesondere Zu- und/oder Abnahme der Signalamplitude bzw. Änderung der Phase des Signals, zwischen erstem und zweitem Sampling, folglich ersten und zweitem Ist-Wert, betrachte wird, in Form von Relativwerten, wie beispielsweise Steigungs-, Differenz-, Verhältnisspannen. Daraus lässt sich dann zusammen mit dem ersten Ist-Wert eine absolute Sollerwartungswertspanne bestimmen.

Insbesondere kann die Soll-Erwartungswertspanne bzw. der Soll-Erwartungswert mit Vorteil durch das Funkautorisierungssystem dem mindestens einen ersten Ist-Wert zugeordnet werden und/oder auf Basis des mindestens einen Ist-Werts bestimmt werden/sein. In diesem Fall bestimmt das Funkautorisierungssystem basierend auf dem ersten Ist-Wert die Soll-Erwartungswertspanne, insbesondere den Soll-Erwartungswert. Das Funkautorisierungssystem kann insofern ausgehend vom Ist-Wert des ersten Samplings eine Vorhersage für den Ist-Wert des zweiten Samplings bzw. die Differenz, das Verhältnis und/oder die Änderungsrate zwischen den Ist-Werten des ersten und zweiten Samplings treffen und nachfolgend durch Abgleich ermitteln, ob die gemessenen Ist-Werte bzw. der gemessen Ist-Wert des zweiten Samplings mit der getroffenen Vorhersage in Einklang steht oder nicht. Dabei kann insbesondere mit besonderem Vorteil die Soll-Wertspanne bzw. der Soll-Wert für den im mindestens einen zweiten Sampling erwarteten zweiten Ist-Wert der mindestens einen Signalkenngröße aus dem ersten Ist-Wert mittels des Soll-Verhältnis und/oder der Soll-Differenz und/oder der Soll-Änderungsrate errechnet werden, wobei zum Abgleich insbesondere die errechnete Sollwertspanne, insbesondere der Soll-Wert, mit dem Ist-Wert des zweiten Samplings verglichen wird. Insofern kann in einem erfindungsgemäßen Verfahren anhand des ersten Ist-Wertes, welcher an einem erfindungsgemäßen ersten Zeitpunkt in einem ersten Sampling ermittelt wurde, eine Vorhersage für einen erwarteten zweiten Ist-Wert für die mindestens einen Signalkenngröße zu einem erfindungsgemäßen zweiten Zeitpunkt in einem zweiten Sampling und/oder die absolute oder/relative Änderung bzw. der zeitlichen Änderungsrate der mindestens einen Signalkenngröße zwischen dem erstem Sampling zum ersten Zeitpunkt und dem zweitem Sampling zum zweiten Zeitpunkt getroffen werden, insbesondere in Unterbeachtung der Größe des Zeitintervalls, insbesondere des vorbestimmten zeitlichen Abstands, zwischen ersten und zweiten Zeitpunkt.

Alternativ oder darauf aufbauend kann in einer weiteren vorteilhaften Ausgestaltung des erfindungsgemäßen Verfahrens zum Abgleich zwischen Ist-Werten und Soll-Relation aus dem ersten und zweiten Ist-Wert eine Ist-Relation der zeitlichen Änderung der mindestens einen Signalkenngröße des empfangenen Eingangssignals ermittelt werden, welche mit der Soll-Relation abgeglichen wird. Dabei kann die Ist-Relation insbesondere als ein Ist-Verhältnis oder eine Ist-Differenz zwischen den mindestens einen Signalkenngrößen des mindestens einen ersten Samplings und des mindestens einen zweiten Samplings oder als eine zeitliche Änderungsrate der mindestens einen Kenngröße des Eingangssignals im Zeitintervall zwischen erstem und zweitem Zeitpunkt bestimmt werden/sein. Insbesondere kann mit Vorteil zum Abgleich von Ist-Relation und Soll-Relation das Ist-Verhältnis mit dem Soll-Verhältnis oder die Ist-Differenz mit der Soll-Differenz oder die die zeitliche Änderungsrate mit der Soll-Änderungsrate verglichen werden.

Insbesondere können Soll-Relation, insbesondere Soll-Erwartungswertspanne bzw. Soll-Erwartungswert, insbesondere Soll-Wertspanne bzw. Soll-Wert und/oder Soll-Verhältnis, Soll-Differenz und/oder Soll-Änderungsrate abhängig von der Frequenz des betrachteten Signals bzw. abhängig von Außentemperatur und/oder Wetter-Bedingung sein. Insofern kann vorgesehen sein, für Signale bei unterschiedlichen Frequenzen bzw. für unterschiedliche (äußere) Bedingungen jeweilig angepasste Soll-Relationen, insbesondere Soll-Erwartungswertspannen bzw. Soll-Erwartungswerte, insbesondere Soll-Wertspannen bzw. Soll-Werte und/oder Soll-Verhältnisse, Soll-Differenzen und/oder Soll-Änderungsraten vorzusehen.

Insbesondere können Ist-Relation, insbesondere Ist-Differenz, Ist-Verhältnis und/oder Ist-Änderungsrate und/oder Soll-Relation, insbesondere Soll-Differenz, Soll-Verhältnis und/oder Soll-Änderungsrate, normiert betrachtet werden. Durch die Normierung können insbesondere Schwankungen der Signalkenngröße auf Grund von Umgebungseinflüssen und/oder Abstand, zum Beispiel eine geringe Gesamtenergie des Signals oder eine verminderte maximale Signalamplitude am Empfänger zu kompensieren. So kann es insbesondere vorteilhaft sein, eine Ist- bzw. Soll-Differenz dahingehend zu betrachten, dass die Differenz zwischen erstem und zweitem Sampling durch den Ist-Wert eines der beiden Samplings geteilt oder normiert wird, wobei der Ist-Wert des ersten Samplings bevorzugt wird. Alternativ kann vor allem eine Normierung auf eine eingestrahlte Gesamtenergie eines Signals von Vorteil sein. Insbesondere kann es auch im Fall von Änderungsrate als Absolutwerten vorteilhaft sein, diese normiert zu betrachten und insbesondere den Ist-Wert eines der Samplings, bevorzugt des ersten Sampling, oder die eingestrahlte Energie zur Normierung zu verwenden.

Mittels des Abgleichs der Ist-Werte bzw. der Ist-Relation mit der Soll-Relation wird mindestens eine Abweichung bestimmt, anhand welcher das Funkautorisierungssystem erkennt, ob das empfangene Signal als Signal des Funkautorisierungssystem zu werten und/oder als Freigabesignal zu erkennen ist und/oder eine Freigabe bewirkt wird bzw. als Angriff und/oder ein dem Funkautorisierungssystem fremdes Signal zu werten ist und/oder eine Freigabe verwehrt wird. Dabei wird die durch Abgleich der Ist-Werte bzw. der Ist-Relation mit der mindestens einen Soll-Relation ermittelte mindestens eine Abweichung mit einer vorbestimmten Toleranz verglichen.

Die mindestens eine vorbestimmte Toleranz definiert insofern inwiefern die Ist-Werte bzw. einer der Ist-Werte bzw. die Ist-Relation von der Soll-Relation abweichen dürfen bzw. darf. Die vorbestimmte Toleranz bildet demnach insbesondere ein Kriterium, um anhand der Abweichung aus Abgleich zwischen Ist-Werten bzw. Ist-Relation und Soll-Relation hinsichtlich der mindestens einen Signalkenngröße empfangener Eingangssignale zwischen einem Freigabesignal und/oder einem dem Funkautorisierungssystem fremden Signal und/oder einem Angriff unterschieden werden kann, definiert insofern bis zu welcher Abweichung ein Freigabesignal erkannt werden kann.

Zeigt der entsprechende Abgleich, dass das die mindestens eine Abweichung der Ist-Werte des ersten und zweiten Samplings und/oder des Ist-Werts des zweiten Samplings und/oder der Ist-Relation, insbesondere des Verhältnisses, der Differenz und/oder Änderungsrate zwischen den Ist-Werten des ersten und zweiten Samplings, von der Soll-Relation hinsichtlich der mindestens einen Signalkenngröße des empfangenen Eingangssignal außerhalb der mindestens einen vorbestimmten Toleranz liegt, so wird das Eingangssignal als Angriff und/oder als ein dem Funkautorisierungssystem fremdes Signal gewertet und insbesondere eine Freigabe verwehrt.

Liegt die mindestens eine Abweichung der Ist-Werte des ersten und zweiten Samplings und/oder des Ist-Werts des zweiten Samplings und/oder der Ist-Relation, insbesondere des Verhältnisses, der Differenz und/oder Änderungsrate zwischen den Ist-Werten, des ersten und zweiten Samplings von der Soll-Relation hinsichtlich der mindestens einen Signalkenngröße des empfangenen Eingangssignals innerhalb der mindestens einen vorbestimmten Toleranz und entspricht insbesondere die Codierung und/oder Verschlüsselung und/oder der entsprechenden Inhalt und/oder (Symbol-)Code des Eingangssignals jener/n eines Freigabesignals, so wird das Eingangssignals als ein Signal, insbesondere Freigabesignal, des Funkautorisierungssystems gewertet. Insbesondere wird in der Folge eine Freigabe erteilt. Insbesondere wird der Inhalt des Signals nur geprüft, wenn die mindestens eine Abweichung der Ist-Werte von der Soll-Relation hinsichtlich der mindestens einen Signalkenngröße des empfangenen Eingangssignals innerhalb der mindestens einen vorbestimmten Toleranz liegt. Die Toleranz kann auch mit dem Wert von null vorbestimmt sein. Insbesondere besteht eine Wechselbeziehung zwischen einer durch die Soll-Relation ggf. gegebene Spanne und der Toleranz. So lange immer nur ein einzelner Abgleich losgelöst von weiteren Abgleichen durchgeführt wird, ist es in der Regel unerheblich wie eine insgesamt zu akzeptierender Unterschied auf Spanne und Toleranz aufgeteilt wird. Werden mehrere Ist-Wertpaare gemeinsam betrachtet besteht durchaus ein Unterschied dahingehend, dass eine Spanne jedem einzelnen Paar zugeordnet ist und eine Toleranz der Gesamtheit zugeordnet sein kann.

Insbesondere kann zu beachten sein, dass auch Signale des Funkautorisierungssystem, insbesondere Freigabesignale, Schwankungen, so auch hinsichtlich der mindestens einem Signalkenngröße, im Zeitverlauf unterliegen können, sodass insbesondere die vorbestimmte Toleranz derart zu wählen ist, dass entsprechenden Schwankung der Signale des Funkautorisierungssystems im Zeitverlauf des Signals, insbesondere Freigabesignals, innerhalb der Toleranz liegen. Entsprechende Schwankungen können sich insbesondere beispielsweise durch den Einfluss der Außentemperatur bzw. äußeren Wetterbedingungen auf Funksignale oder einer Abhängigkeit von der Frequenz der Funksignale ergeben, aber auch insbesondere hinsichtlich Qualität der eingesetzten Komponenten wie beispielsweise Sender und/oder Empfänger.

Dabei ist das zweite Objekt insbesondere eingerichtet, Freigabesignale derart auszusenden, dass die mindestens eine Abweichung des mindestens einen ersten und mindestens einen zweiten Ist-Werts der zeitlichen Änderung bzw. die Ist-Relation der mindestens einen Signalkenngröße, insbesondere eines am ersten Objekt als Eingangssignals empfangenen Freigabesignals, von der mindestens einen Soll-Relation innerhalb der vorbestimmten Toleranz liegt. Somit ist das zweite Objekt und/oder das Funkautorisierungssystem insbesondere eingerichtet, eine Freigabe durch Senden des Freigabesignals an das erste Objekt zu bewirken.

Insbesondere können, insbesondere für den Falls die mindestes eine Soll-Relation durch eine Soll-Erwartungswertspanne gegeben ist und/oder als solche bestimmt ist und/oder wird, die Soll-Relation, insbesondere die Soll-Erwartungswertspanne und die vorbestimmte Toleranz gemeinsam einen Vertrauensbereich für die Ist-Werte, insbesondere den zweiten Ist-Wert, bzw. die Ist-Relation der mindestens einen Signalkenngröße eines empfangenen Eingangssignals definieren, in welcher ein solches insbesondere als Freigabesignal und/oder als Signal des Funkautorisierungssystem erkannt und/oder gewertet werden kann. Dabei kann der Vertrauensbereich insbesondere die Soll-Relation, insbesondere die Soll-Erwartungswertspanne umfassen, insbesondere gebildet sein aus Soll-Erwartungswertspanne umschlossen von der vorbestimmten Toleranz.

In einer vorteilhaften Ausführungsform können die mindestens einen Soll-Relation und/oder die vorbestimmte Toleranz durch das Funkautorisierungssystem ausschließlich auf im Funkautorisierungssystem vorbestimmten Daten und/oder Signalen des Funkautorisierungssystem bestimmt sein und/oder werden, insbesondere anhand der vorbestimmten Änderung der mindestens einen Signalkenngröße im Zeitverlauf des Freigabesignals.

Dabei können sich die mindestens eine Soll-Relation und/oder die vorbestimmte Toleranz sich für verschiedene Funkautorisierungssysteme unterscheiden beziehungsweise werden sie insbesondere jeweils auf verschiedene Funkautorisierungssysteme angepasst, können demnach jedem Funkautorisierungssystem inhärent sein. Sie können aber auch situationsbedingt und/oder basierend auf im Funkautorisierungssystem hinterlegten, insbesondere historischen, Daten so vorbestimmt sein und/oder ermittelt werden, dass bestimmt ist, wie Soll-Relation und/oder die vorbestimmte Toleranz aus den hinterlegten Daten ableitbar sind. Alternativ können sie fest vorbestimmt, insbesondere als absoluter oder vorzugsweise relativer Zahlenwert oder durch Grenzen als absolute oder vorzugsweise relative Zahlenwerte vorbestimmt sein. Insbesondere bedingen Zeitverlauf der mindestens einen Signalkenngröße des Freigabesignals und Soll-Relation und/oder vorbestimmte Toleranz einander und/oder werden für verschiedenen Funkautorisierungssysteme aneinander angepasst beziehungsweise definieren einander. In der Regel werden vorbestimmte Toleranz und/oder Soll-Relation an das Freigabesignal angepasst.

Mit Vorteil kann die Bestimmung der Soll-Relation und/oder der vorbestimmten Toleranz auf Basis von Kalibrierdaten für die mindestens eine vorbestimmte Änderung der mindestens einen Signalkenngröße im Zeitverlauf erfolgen, wobei die Kalibrierdaten aus einer Vielzahl, insbesondere als Eingangssignal, gemessener Freigabesignale stammen. So kann vorgesehen sein, dass zur Kalibrierung eines erfindungsgemäßen Verfahrens in einer sicheren Umgebung, d.h. einer solchen, in welcher ein Angriff auf das Funkautorisierungssystem ausgeschlossen ist bzw. werden kann, die Vielzahl Freigabesignale innerhalb des Funkautorisierungssystem zur Erstellung der Kalibrierdaten versendet und empfangenen wird. Mit Vorteil wird eine solche Kalibrierung insbesondere zur Kalibrierung eines erfindungsgemäßen Funkautorisierungssystem, insbesondere beispielsweise vor Auslieferung eines erfindungsgemäßen Funkautorisierungssystems an einen Endverbraucher, durchgeführt.

Insbesondere kann anhand der Kalibrierdaten eine Erfahrungswerttabelle und/oder eine Erfahrungswertfunktion auf dem Funkautorisierungssystem erzeugt werden und in dem Funkautorisierungssystem hinterlegt werden/sein. Die Erfahrungswerttabelle kann dabei derart gestaltet sein, dass in dieser zu Messwerten für den ersten Ist-Wert der mindestens einen Signalkenngröße des ersten Samplings eine jeweilige Soll-Relation bzw. jeweilige Soll-Relationen, insbesondere eine Soll-Erwartungswertspanne und/oder ein Soll-Erwartungswert und/oder ein Soll-Verhältnis und/oder eine Soll-Differenz und/oder eine Soll-Änderungsrate, im Hinblick auf einen erwarteten Messwert für einen zweiten Ist-Wert der mindestens einen Signalkenngröße des zweiten Samplings zugeordnet sind und/oder bestimmt werden können, insbesondere in Anbetracht des zeitlichen Abstands zwischen erstem und zweiten Zeitpunkt bzw. Sampling. Aus der Erfahrungswerttabelle kann dann insofern insbesondere der erwarte zweite Ist-Wert absolut oder relativ zum ersten Ist-Wert bestimmt und/oder abgelesen werden. Eine Erwartungswertfunktion ermöglicht insbesondere eine Berechnung der Soll-Relation, insbesondere der Soll-Erwartungswertspanne bzw. des Soll-Erwartungswertes für den zweiten Ist-Wert des zweiten Samplings, aus dem gemessenen ersten Ist-Wert des ersten Samplings, insbesondere in Abhängigkeit vom zeitlichen Intervall zwischen ersten und zweiten Sampling, folglich dem zeitlichen Abstand zwischen erstem und zweiten Zeitpunkt.

Mit Vorteil können die initialen Kalibrierdaten aus der Vielzahl gemessener Freigabesignale bzw. die aus den Kalibrierdaten ermittelten und innerhalb der Erfahrungswerttabelle und/oder der Erfahrungswertfunktion gespeicherten Erfahrungswerte, insbesondere stammend aus bereits beschriebener Kalibrierung des Verfahrens und/oder des Funkautorisierungssystems, durch Daten von als Eingangssignal gemessenen Freigabesignalen ergänzt und/oder zu mindestens teilweise ersetzt werden, insbesondere unter Gewichtung der Daten, insbesondere hinsichtlich ihres Entstehungszeitpunkts. Auf diese Weise erfolgt eine Anpassung der Kalibrierung, insbesondere auch im Hinblick auf eine mögliche Alterung der eingesetzten Komponenten wie beispielsweise Sender und/oder Empfänger bzw. des ersten und/oder zweiten Objekts, insbesondere im Hinblick einer aus der Alterung folgenden verminderte Signalintensität und/oder verminderten Messgenauigkeit oder dergleichen, sowie aber auch hinsichtlich der Qualität der eingesetzten Komponenten. Insbesondere kann auf diese Weise auch beispielsweise im Hinblick auf abweichende Außentemperaturen über verschiedene Jahreszeiten und/oder verschiedene Einsatzorte eine Anpassung der Kalibrierung auf veränderte äußere Bedingungen hinsichtlich Temperatur erfolgen. Auch kann vorgesehen sein für verschiedenen (Außen-)Temperaturen unterschiedliche Kalibierdaten vorzusehen. Gleichermaßen können alternativ oder zusätzlich jeweils für Signale bei unterschiedlichen Frequenzen eigene Kalibrierdaten vorgesehen sein.

Vorteilhafterweise kann aus den Kalibrierdaten, insbesondere den initialen und/oder aktualisierten Kalibrierdaten mindestens eine statistische Kenngröße ermittelt werden. Die ermittelte statistische Kenngröße kann dann zur Bestimmung der Soll-Relation, insbesondere der Soll-Erwartungswertspanne bzw. des Soll-Erwartungswerts, und/oder der vorbestimmten Toleranz verwendet werden. Als statistische Kenngröße können insbesondere Mittelwert, Median, Quartil, Quantil, Konfidenzintervall, Konfidenzbereich, Varianz und/oder Standardabweichung dienen. So kann beispielsweise aus einer Punktwolke von Kalibrierdaten, insbesondere mehreren Punkten stammend aus mehrmaligen Messungen einer Signalflanke eines einzelnen Signaltyps, insbesondere für ein Freigabesignal, zunächst ein Soll-Erwartungswert mit Hilfe von vorzugsweise Mittelwertbildung ermittelt werden.

Dabei kann es insbesondere vorteilhaft sein, wenn die mehrmaligen Messungen der Signalflanke des einzelnen Signaltyps in verschiedenen der Messung, insbesondere für jede der mehrmaligen Messungen, Messpunkte umfassen, welche innerhalb der Signalflanke zu einem identischen relativen Zeitpunkt im Zeitverlauf der jeweiligen Signalflanke erfolgen. Nachfolgend an die Bestimmung der Soll-Relation kann beispielsweise mittels Varianz und/oder Standardabweichung die vorbestimmte Toleranz für die Abweichung bestimmt werden, so insbesondere beispielsweise für die Abweichung des Ist-Werts des zweiten Samplings vom Soll-Erwartungswert. Gleichsam kann entsprechend vorstehendem Beispiel in analoger Weise dahingehend vorgegangen werden, dass es sich bei der Soll-Relation abweichend um ein Soll-Verhältnis, eine Soll-Differenz oder eine Soll-Änderungsrate bzw. eine Soll-Erwartungswertspanne handelt, insbesondere auch für den Fall, dass anstelle des Ist-Werts des zweiten Sampling eine Ist-Relation zwischen erstem und zweitem Sampling betrachtet wird. Insgesamt ist hierbei der Einsatz zahlreicher statistischer Kenngrößen bzw. deren Kombination zur Ermittlung der Soll-Relation und/oder der vorbestimmten Toleranz aus den Kalibrierdaten denkbar. Alternativ kann mittels Fit entlang des erwarteten Zeitverlaufs der Erwartungswerte für ein Freigabesignal, insbesondere erhalten durch beschriebene Kalibrierung, die Erfahrungswertfunktion erhalten werden. Zu dieser kann zum Erhalt des Vertrauensbereichs für ein Freigabesignal die vorbestimmte Toleranz ergänzt werden, beispielsweise ermittelt durch eine der beschriebenen statistischen Methoden.

Mit Vorteil kann die vorbestimmte Toleranz hierbei als Relativwert zur Soll-Erwartung definiert sein und insbesondere die Toleranz des Messwertes 25% oder weniger, insbesondere 10% oder weniger, insbesondere 2.5% oder weniger der maximalen Signalkenngrößenveränderung in der Signalflanke betragen. Also bei einer ansteigenden Flanke in der Amplitude von 0 auf 80 könnte die Toleranz 20, insbesondere 8, besonders bevorzugt 2 betragen. Bei der abfallenden Flanke wäre die gleiche Toleranz sinnvoll, kann aber auch eine etwas andere Toleranz sinnvoll sein. Denkbar ist jedoch auch Definitionen durch Absolutwerte.

In einer weiteren vorteilhaften Ausgestaltungsform eines erfindungsgemäßen Verfahrens kann eine Mehrzahl Samplings an dem empfangenen Eingangssignal durchgeführt werden. Die Mehrzahl der Samplings kann hierbei sowohl in äquidistanten Zeitabständen oder mit variierenden Zeitintervallen genommen werden. Aus der Mehrzahl der Samplings können dann jeweils zwei der Samplings jeweils als Paar aus erstem und zweitem Sampling betrachtet werden. Die jeweiligen Paare bzw. das erste und zweite Sampling eines jeden Paares werden dann jeweils mit der Soll-Relation abgeglichen. Dabei können die Paare insbesondere zeitlich gegeneinander im Zeitverlauf des Eingangssignals zumindest teilweise versetzt sein, können sich vorteilhafterweise insbesondere aneinander zeitlich anschließen und/oder zeitlich überlappen.

In einer weiteren vorteilhaften Ausgestaltung können die Paare so gewählt und/oder gebildet sein/werden, dass das erste Sampling eines zweiten der Paare dem zweiten Sampling eines ersten der Paare entspricht. Alternativ kann aber auch insbesondere das erste Sampling mit jedem der nachfolgenden Samplings an einer Flanke eines Signals jeweils ein Paar bilden, wobei innerhalb dieser Paare in der Folge der zeitliche Abstand zwischen erstem und zweitem Sampling pro Paar zwischen den Paaren variiert. Dies kann insbesondere auch der Fall sein, falls die Mehrzahl Samplings in äquidistanten Zeitabständen genommen wurden. Mittels beider skizzierten Arten des Paarens der Samplings können so beispielsweise aus drei Samplings zwei Paare, aus vier Samplings drei Paare etc. zum Abgleich nach dem erfindungsgemäßen Verfahren erhalten werden.

Insbesondere können die Paare mit Vorteil derart gewählt und/oder gebildet sein/werden, dass zumindest eines der Paare bzw. dessen erstes und zweites Sampling in einem erfindungsgemäßen mittleren Bereich einer Signalflanke genommen werden.

Die aus den einzelnen Abgleichen erhaltenen Abweichung können in der Folge sowohl einzeln als auch gemeinsam mit der vorbestimmten Toleranz verglichen werden. So kann bei getrennter Betrachtung der Paare eine Freigabe verwehrt werden, wenn die Abweichung eines der Paare der Mehrzahl Samplings außerhalb der vorbestimmten Toleranz liegt. Alternativ können die Paare jedoch auch derart gemeinsam betrachtet werden, dass beispielsweise eine mittlere Abweichung über die Paare ermittelt wird und eine Freigabe dann verwehrt wird, wenn die mittlere Abweichung außerhalb der vorbestimmten Toleranz liegt. Auch der Einsatz anderer statistischer Auswertemethoden zur gemeinsamen Betrachtung der Paare nebst oder alternativ zur Mittelwertbildung sind denkbar und möglich.

Ein erfindungsgemäßes Verfahren mit einer Mehrzahl, insbesondere äquidistanter, Samplings an einer einzelnen Flanke eines Signals bietet sich vor allem vorteilhafterweise an bzw. kann notwendig sein, wenn die mindestens eine Signalkenngröße im Zeitverlauf eine von einer linearen Änderung abweichende Form der Änderung zeigt, so beispielsweise ein Gauß-förmiges Profil aufweisen. Weitere Formen der Änderung der mindestens einen Signalkenngröße im Zeitverlauf sind denkbar und können auch mittels eines entsprechenden, insbesondere gewählten und/oder angepassten, erfindungsgemäßen Verfahren betrachtet werden. Insbesondere ist, wenn die zeitliche Änderung der mindestens einen Signalkenngröße keinen linearen Verlauf zeigt, die zeitliche Änderungsrate des mindestens einen Signalkenngröße innerhalb einer einzelnen Flanke eines einzigen Signals nicht konstant über den zeitlichen Verlauf dieses Signals, sondern unterliegt selbst einer Änderung. In einem solchen Fall kann dann auch, die zeitliche Änderung der zeitlichen Änderungsrate als jeweilige Ist-Relation und/oder Soll-Relation verwendet werden.

Es wird ersichtlich, dass durch das erfindungsgemäße Verfahrens nach Anspruch 1 sowie den vorteilhaften Weiterbildungen mit Hilfe der mindestens einen Signalkenngröße bzw. deren Änderung im Zeitverlaufs des Eingangssignals in einem Funkautorisierungssystem die Herkunft des Eingangssignals insofern bestimmt werden kann, dass zwischen einem zweiten Objekt, dessen Signal als Freigabesignal einen Nutzer zu einem autorisierten Zugang berechtigt, und einem dritten, insbesondere externen, dem Funkautorisierungssystem fremden Objekt, dessen Zugang verhindert werden soll, und welches beispielsweise einen "early detect/late-commit"-Angriff durchführt, unterschieden werden kann. Im Gegensatz zum Stand der Technik, welcher zumeist ausschließlich darauf fokussiert ist, einem Angriff möglichst zu erschweren, können entsprechende Freigabesignale hierzu durchaus einfach und somit weniger komplex gestaltet werden, da der Angriff nicht unmittelbar verhindert, sondern lediglich erkannt werden muss, um ihn dann zu vereiteln. Insbesondere "early-detect/late-commit"-Angriffe können aufgrund abweichenden, insbesondere schnelleren bzw. zeitlich komprimierten Änderung der Signalkenngröße, beispielsweise schnellerem Amplitudenanstieg bzw. Abfall und/oder schnellerer Phasenänderung der (Angriffs-)Signale auf diese Weise äußerst effizient erkannt werden. Ferner können die technischen Anforderungen an die Ausgestaltung entsprechender Funkautorisierungssysteme beziehungsweise derer Komponenten reduziert werden, wodurch folglich eine ressourcenschonendere Bauweise solcher Funkautorisierungssysteme ermöglicht wird.

In einer weiteren vorteilhaften Ausbildung wird das Freigabesignal mehrfach wiederholt durch das zweite Objekt abgestrahlt, und/oder wird das Eingangssignal wird über eine Mehrzahl von Wiederholungen empfangen und das erfindungsgemäße Verfahren mehrfach durchgeführt, insbesondere das Eingangssignal mehrfach nach dem erfindungsgemäßen Verfahren gesampelt und die Ist-Werte der mindestens einen Signalkenngröße mit der Soll-Relation abgeglichen und die über den Abgleich ermittelte Abweichung mit der vorbestimmten Toleranz bei mindestens einer, insbesondere einer Mehrzahl, insbesondere einer Vielzahl, der Wiederholungen mit der vorbestimmten Toleranz verglichen.

Ferner wird die erfindungsgemäße Aufgabe ebenfalls durch ein Funkautorisierungssystem nach Anspruch 12 gelöst. Vorteilhafte Weiterbildungen des erfindungsgemäßen Funkautorisierungssystems finden sich in den Ansprüchen 13 und 14. Ferner lassen sich erfindungsgemäße Vorteile und Weiterbildungen des erfindungsgemäßen Verfahrens gleichermaßen auf das erfindungsgemäße Funkautorisierungssystem übertragen und umgekehrt.

Das erfindungsgemäße Funkautorisierungssystem zum Erfassen und Analysieren eines empfangenen Eingangssignals in einer Funkkommunikation ist zum Nehmen von Samplings von Ist-Werten mindestens einer Änderung mindestens einer Signalkenngröße im Zeitverlauf eines in einer Funkkommunikation zwischen dem ersten und zweiten Transceiver am ersten Transceiver empfangenen Eingangssignals, insbesondere zweiten analogen Datensignal, und ferner zum Abgleich der Ist-Werte der Samplings mit mindestens einer Soll-Relation zur Ermittlung mindestens einer Abweichung eingerichtet, wobei die mindestens eine Signalkenngröße eine Amplitude und/oder Phase ist und/oder beinhaltet. Ferner ist das Funkautorisierungssystem eingerichtet, zur Erkennung eines Angriffs oder zur Erkennung des Eingangssignals als ein dem Funkautorisierungssystem fremdes Signal und/oder zur Verweigerung einer Freigabe basierend auf dem Vergleich der durch Abgleich der Ist-Werte für die mindestens einen Signalkenngröße des Eingangssignals mit der Soll-Relation ermittelten mindestens einen Abweichung mit der vorbestimmten Toleranz eingerichtet. Das Eingangssignal wird insbesondere als Angriff und/oder ein dem Funkautorisierungssystem fremdes Signal gewertet, und/oder es wird eine Freigabe verweigert falls die durch den Abgleich ermittelte mindestens eine Abweichung außerhalb der vorbestimmten Toleranz liegt. Ferner ist das Empfangsmodul insbesondere eingerichtet, das Eingangssignal als Freigabesignal und/oder ein dem Funkautorisierungssystem bekanntes Signal zu werten und/oder eine Freigabe zu gewähren, falls die durch den Abgleich ermittelte mindestens eine Abweichung des Eingangssignals innerhalb der vorbestimmten Toleranz liegt.

Gelöst wird die Aufgabe somit insbesondere durch ein Funkautorisierungssystem mit einem ersten Transceiver in und/oder an einem ersten Objekt und einem zweiten Transceiver in und/oder an einem zweiten Objekt, wobei das Funkautorisierungssystem eingerichtet ist vom ersten zum zweiten Transceiver eine Vielzahl von Symbolen und/oder Chips mit einer ersten Symbol- oder Chiprate in mindestens einem ersten analogen Datensignal codiert zu übertragen und/oder vom zweiten zum ersten Transceiver eine Vielzahl von Symbolen und/oder Chips mit einer zweiten oder der ersten Symbol- oder Chiprate in mindestens einem zweiten analogen Datensignal codiert zu übertragen. Dabei ist das das Funkautorisierungssystem eingerichtet zum Erfassen und Analysieren eines in einer Funkkommunikation zwischen dem ersten und zweiten Transceiver am ersten Transceiver empfangenen Eingangssignals, insbesondere zweiten analogen Datensignal, und eingerichtet zum Nehmen von Samplings von Ist-Werten mindestens einer Änderung mindestens einer Signalkenngröße und eingerichtet zur Ermittlung der mindestens einen Abweichung durch Abgleich der Ist-Werte mit der Soll-Relation und zum Vergleich der ermittelten mindestens einen Abweichung des Eingangssignals mit mindestens einer vorbestimmten Toleranz, wobei das Funkautorisierungssystem eingerichtet ist,
a. das Eingangssignal als Angriff und/oder ein dem Funkautorisierungssystem fremdes Signal gewertet und/oder eine Freigabe verweigert wird, die mindestens eine Abweichung außerhalb der mindestens einen vorbestimmten Toleranz liegt und/oder
b. das Eingangssignal als ein Signal des Funkautorisierungssystem gewertet und/oder eine Freigabe gewährt wird, falls die mindestens eine Abweichung innerhalb der mindestens einen vorbestimmten Toleranz liegt.

Dabei ist das Funkautorisierungssystem eingerichtet ist, die Soll-Relation und/oder die vorbestimmte Toleranz ausschließlich auf im Funkautorisierungssystem vorbestimmten Daten und/oder Signalen des Funkautorisierungssystem zu bestimmen, insbesondere anhand einer vorbestimmten Änderung der mindestens einen Signalkenngröße im Zeitverlauf eines Freigabesignals. Dabei kann es sich beispielsweise um einen gespeicherten Code und/oder eine gespeicherte ID handeln. Auch kann beispielsweise eine im zweiten Objekt gespeicherten Objekt gespeicherte ID und eine vom ersten Objekt empfangene Information gemeinsam genutzt werden, um eine im Freigabesignal zu codierende Information zu bestimmen und das Freigabesignal entsprechend zu erzeugen. Vorteilhafterweise ist das zweite Objekt eingerichtet, so zu verfahren.

Erfindungsgemäß ist der zweite Transceiver eingerichtet, das mindestens eine Freigabesignal so zu erzeugen und/oder auszusenden, dass die Abweichung mindestens eines ersten und mindestens eines zweiten Ist-Werts des mindestens einen Freigabesignals, insbesondere eines am ersten Transceiver als Eingangssignals empfangenen Freigabesignals, von der mindestens einen Soll-Relation innerhalb der mindestens einen vorbestimmten Toleranz liegt.

Insbesondere ist der zweite Transceiver eingerichtet, das mindestens eine Freigabesignal ausschließlich auf Basis von im Funkautorisierungssystem vorbestimmten Daten und/oder auf Basis von Signalen des Funkautorisierungssystems, insbesondere des mindestens einen ersten analogen Signals, zu bestimmen. So kann das Freigabesignal nach einer auf dem zweiten Transceiver und/oder dem zweiten Objekt, insbesondere Schlüssel, gespeicherten Anweisung erzeugt werden und/oder auf einem vom Funkautorisierungssystem, insbesondere dem ersten Transceiver und/oder erstem Objekt, erzeugten und vom zweiten Transceiver und/oder zweiten Objekt, insbesondere Schlüssel, empfangenen Signal basierend erzeugt werden. Insbesondere werden zur Erzeugung des Freigabesignals keine äußeren Informationen genutzt, die nicht auf im Funkautorisierungssystem vorbestimmt gespeicherten Daten beruhen oder auf Basis solcher durch das Funkautorisierungssystem erzeugt werden. Insbesondere basiert das Freigabesignal nicht auf dem Funkautorisierungssystem fremden Signalen und/oder nicht auf Umgebungssignalen.

Des Weiteren ist der der zweite Transceiver und/oder das zweite Objekt eingerichtet ist, das mindestens eine Freigabesignal als Teil des mindesten einen zweiten analogen Datensignals zu senden und insbesondere in dem Freigabesignal Information, insbesondere digital, in einer Mehrzahl von Symbolen und/oder Chips zu codieren.

Vorteilhafte Ausgestaltungen des Verfahrens lassen sich vorteilhafterweise auf das System übertragen, insbesondere durch eine entsprechende Einrichtung des Systems, insbesondere des ersten und/oder zweiten Transceivers.

Insbesondere ist das erfindungsgemäße System eingerichtet ein erfindungsgemäßes Verfahren durchzuführen.

Insbesondere handelt es sich bei dem zweiten Objekt um einen Transceiver. Das zweite Objekt und/oder der zweite Transceiver des Verfahrens, der Vorrichtung und/oder des Systems ist insbesondere als Keyfob ausgeführt. Insbesondere ist das System eingerichtet und/oder wird das erfindungsgemäße Verfahren so durchgeführt, dass das Freigabesignal als Antwort auf den Empfang eines ersten Datensignals am zweiten Objekt und/oder Transceiver gesendet wird. Insbesondere ist das System eingerichtet und/oder wird das erfindungsgemäße Verfahren so durchgeführt, dass ein erstes Datensignal vom ersten Objekt und/oder ersten Transceiver gesendet wird, wenn eine Annäherung einer Person an das erste Objekt und/oder den ersten Transceiver oder mit diesem fest, aber nicht notwendigerweise steif, verbundenes Bauteil, wie beispielsweise eine Tür, Türgriff, Zugangsbeschränkungsmittel und/oder Schranke festgestellt wird. Insbesondere sondere sind das erste Objekt und das zweite Objekt zwei voneinander getrennte Objekt. Insbesondere ist das System eingerichtet und/oder wird das erfindungsgemäße Verfahren so durchgeführt, dass das im Freigabesignal eine ID und/oder ein Codewort symbol- und/oder chipcodiert ist. Das Codewort wird insbesondere zumindest auch auf Basis einer vom ersten Objekt in einem Funksignal, insbesondere ersten analogen Datensignal, symbol- und/oder chipcodiert erhaltenden Information bestimmt. Insbesondere ist das zweite Objekt und/oder der zweite Transceiver entsprechend eingerichtet.

Mit Vorteil wird das Freigabesignal, insbesondere zusammen mit dem mindestens einen ersten analogen Datensignal, zur Entfernungsmessung zwischen erstem und zweitem Objekt und/oder erstem und zweitem Transceiver und/oder deren Antennen verwendet. Insbesondere ist das System entsprechend eingerichtet Gleichermaßen wird die erfindungsgemäße Aufgabe durch ein Funkautorisierungssystem mit einer Zugangsbeschränkungsvorrichtung gelöst wobei die Zugangsbeschränkungsvorrichtung eingerichtet ist, den Zugang zu gewähren und/oder zu verweigern, insbesondere mittels eines Zugangsbeschränkungsmittels, wobei die Zugangsbeschränkungsvorrichtung eingerichtet ist, den Zugang zu verweigern, falls das Eingangssignal als Angriff oder ein dem Funkautorisierungssystem fremdes Signal gewertet wird und/oder falls die mindestens eine Abweichung der Ist-Werte des Eingangssignals hinsichtlich der mindestens einen Signalkenngröße im Zeitverlauf ermittelt durch Abgleich mit der Soll-Relation außerhalb der vorbestimmten Toleranz liegt und/oder den Zugang zu gewähren, falls das Eingangssignal als Freigabesignal und/oder ein dem Funkautorisierungssystem bekanntes Signal gewertet wird und/oder falls die mindestens eine Abweichung der Ist-Werte des Eingangssignals hinsichtlich der mindestens einen Signalkenngröße im Zeitverlauf ermittelt durch Abgleich mit der Soll-Relation außerhalb der vorbestimmten Toleranz liegt.

Ferner kann das erfindungsgemäße Funkautorisierungssystem zur Durchführung eines erfindungsgemäßen Verfahrens eingerichtet sein. Dazu weist das Verfahren bzw. das Funkautorisierungssystem insbesondere eine Steuerungseinheit auf, eingerichtet das erfindungsgemäße Funkautorisierungssystem in einem erfindungsgemäßen Verfahren gemäß des erfindungsgemäßen Verfahrens entsprechend anzusteuern.

Darüber hinaus kann das erfindungsgemäße Verfahren insbesondere mittels eines erfindungsgemäßen Funkautorisierungssystems ausgeführt werden.

Die nachfolgende, rein exemplarische Beschreibung der rein exemplarischen und schematischen Figuren trägt zum besseren Verständnis der Erfindung, insbesondere des erfindungsgemäßen Verfahrens, bei. Hierbei zeigen:
- Figur 1: eine Veranschaulichung eines Freigabesignal sowie eines Angriffs-signals im Vergleich hinsichtlich ihrer zeitlichen Änderung bezüg-lich ihrer Signalamplitude;
- Figur 2: eine schematische Darstellung eines erfindungsgemäßen Verfahrens umfassend jeweils ein erstes und zweites Sampling des Freigabe- (oben) und des "Angriffssignals (unten) aus Fig. 1 unter Messung absoluter Messwerte der Amplitude;
- Figur 3: eine schematische Darstellung einer alternativen Ausgestaltung des erfindungsgemäßen Verfahrens aus Fig. 2 unter Bestimmung relativer Messwerte hinsichtlich der Amplitude;
- Figur 4: eine Veranschaulichung einer vorteilhaften Weiterbildung des erfindungsgemäßen Verfahrens umfassend jeweils mehr als zwei Samplings entlang einer Signalflanke des Freigabe- (oben) und des Angriffssignals (unten) aus den Fig. 1 bis 3;
- Figur 5: eine Veranschaulichung von Kalibrierdaten stammend aus einer Messung einer Vielzahl von Freigabesignalen;
- Figur 6: eine Darstellung von aus den Kalibrierdaten aus Fig. 5 erhalten Erfahrungswerte in Form diskreter Soll-Werte sowie eines Vertrauensbereichs hinsichtlich.
- Figur 7: eine Darstellung von aus den Kalibrierdaten aus Fig. 5 erhalten Erfahrungswertfunktion in Form kontinuierlicher Soll-Werte sowie eines Vertrauensbereichs hinsichtlich bzw. einer Soll-Wertspanne.
- Figur 8: eine schematische Darstellung eines als Eingangssignals gemessenen Angriffs-Signals umfassend ein erstes Sampling, eine Vorhersage eines Soll-Erwartungswerts auf Basis des ersten Samplings und ein zweites Sampling;
- Figur 9: eine schematische Darstellung der einzelnen Verfahrensschritte eines erfindungsgemäßen Verfahrens; und
- Figur 10: eine detaillierte Darstellung von zwei vorteilhaften Ausgestaltungen des Verfahrens aus Fig. 9 unter Erweiterung um eine Analyse des Eingangssignals hinsichtlich darin codierter Informationen.

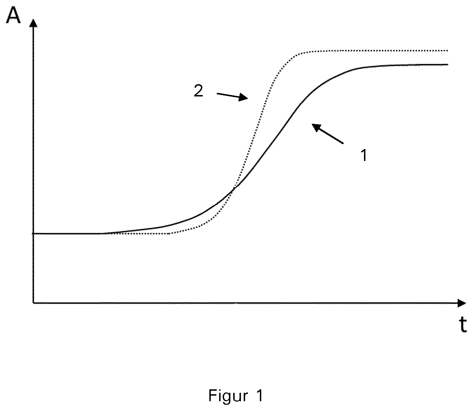

Figur 1 zeigt den Amplitudenverlauf eines Freigabesignals 1 (durchgängige Linie) und eines Angriffssignals 2 (gepunktete Linie), welche als Eingangssignale in einem, insbesondere erfindungsgemäßen Funkautorisierungssystem erfasst werden können. Bei dem Angriffssignal handelt es sich um ein dem Funkautorisierungssystem fremdes Signal, welches beispielsweise aus einem "earlydetect//commit"-Angriff stammen kann. Gezeigt ist für beide Signale eine Auftragung eines zeitlichen Verlaufs hinsichtlich der Signalamplituden A der beiden Signale gegen die Zeit t. Es wird ersichtlich, dass die Flanke des Angriffssignal 2 im Vergleich zum Freigabesignal 1 zeitlich komprimiert ist. Das Angriffssignal 2 zeigt einen zum Freigabesignal 1 in der Regel zeitlich verzögerten Beginn hinsichtlich des Anstiegs der Signalamplitude auf, erreicht hingegen "zeitlich früher" sein Signalmaximum. Dies ist beispielsweise insbesondere für "early-detect/late-commit"-Angriffe charakteristisch. Dabei weisen, insbesondere bei solchen "early-detect/late-commit"-Angriffen, Angriffssignale 2 häufig gegenüber Freigabesignalen 1 erhöhte maximale Signalamplituden auf. Aus Figur 1 ist ersichtlich, dass das Angriffssignal 2 bzw. dessen Amplitude schneller zunimmt als das Freigabesignal 1 bzw. dessen Amplitude. Dieses unterschiedliche Verhalten im Zeitverlauf der Signale wird im erfindungsgemäßen Verfahren auf besondere Weise zur Erkennung des Angriffs verwendet. Zu betonen ist weiter, dass zur Erkennung von Eingangssignalen als Angriffssignalen eine erhöhte maximale Signalamplitude eines Angriffssignals 2 nicht essentiell ist, somit eine Erkennung nach einem erfindungsgemäßen Verfahren auch möglich ist, wenn die maximale Signalamplitude des Angriffssignals 2 jener des Freigabesignals 1 entspricht bzw. unabhängig etwaiger relativer Unterschiede hinsichtlich maximaler Signalamplitude erfolgen kann.

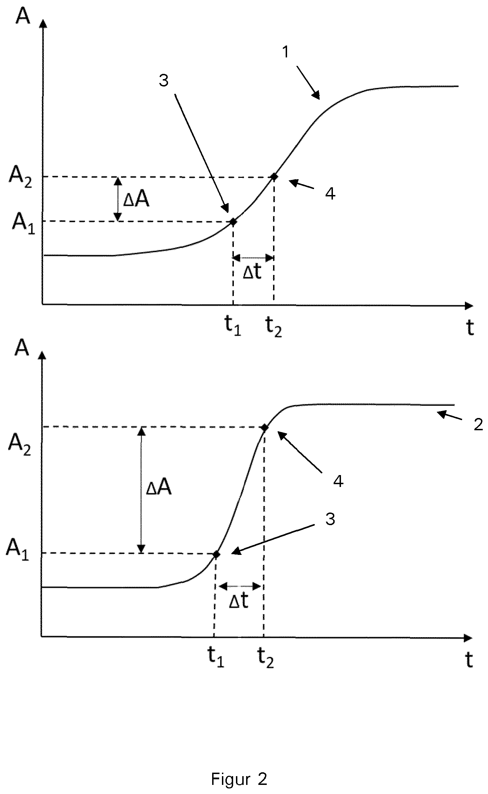

Zur Durchführung eines erfindungsgemäßen Verfahrens werden, so in den Figuren 2 bis 4 dargestellt, zumindest ein Sampling 3 zu einem Zeitpunkt t₁ als erfindungsgemäßes erstes Sampling und ein weiteres Sampling 4 zu einem Zeitpunkte t₂ als erfindungsgemäßes zweites Sampling an einer einzelnen Signalflanke eines Eingangssignals genommen. In Figur 2 werden vorliegend diese Samplings 3,4 für Fälle gezeigt, bei denen es sich bei dem Eingangssignal um das Freigabesignal 1 (oben) bzw. um das Angriffssignal 2 (unten) handelt. Dabei sind t₁ und t₂ bei beiden Signalen zeitlich äquidistant gewählt. Erfasst werden im ersten Sampling jeweils die Amplituden A₁ und im zweiten Sampling die Amplituden A₂ als Absolut-Messwerte. Auf Basis dieser Messwerte können die übrigen Schritte des erfindungsgemäßen Verfahrens zum Erteilen bzw. Verweigern einer Freigabe durchgeführt werden.

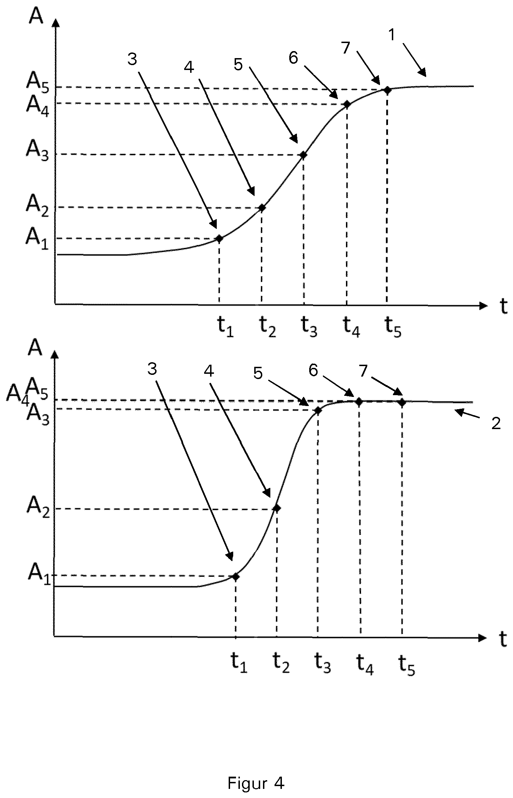

Vorliegend entsprechen die Zeitpunkte t₁ und t₂ für die beiden Eingangssignale 1,2 nicht demselben Zeitpunkt im Signalverlauf, sondern können zeitlich möglicherweise gegeneinander verschoben sein, weisen jedoch denselben zeitlichen Abstand Δt zueinander auf. Der Zeitpunkt t₁ kann dabei jeweils zufällig gewählt sein. Bevorzugt wird der Zeitpunkt t₁ dadurch, insbesondere durch das Funkautorisierungssystem, festgelegt, dass eine regelmäßige Abtastung stattfindet und ein der Zeitpunkt einer solchen Abtastung gewählt wird, bei der am ersten Objekt eine signifikante Signalamplitude gemessen wird, also ein solcher Wert für die Signalamplitude erfasst wird, der signifikant vom Grundrauschen des Empfängers abweicht. Der Zeitpunkt t₂ wird in der Folge mit einem, insbesondere festen, Zeitabstand Δt relativ zu Zeitpunkt t₁ gewählt. Die genaue zeitliche Lage der Zeitpunkte t₁ und t₂ ist hierbei nicht von Relevanz, zumindest solang beide Zeitpunkte innerhalb einer einzigen Signalflanke des betrachteten Signals liegen. Daraus folgt jedoch, dass das Zeitintervall Δt vorzugsweise so zu wählen ist, dass dieses kürzer ist, als die zu erwartete Dauer des Signalanstiegs eines Angriffssignals 2, zumindest jedoch kürzer als die Dauer der Signalflanke eines Freigabesignals 1, vorzugsweise, insbesondere bei äquidistanter zeitlicher Abtastung, insbesondere mit mehreren Abtastungen an der Signalflanke (vgl. auch Figur 4), weniger als ein Drittel der Dauer der Signalflanke des Freigabesignals 1 beträgt. Es sei darauf hingewiesen, dass das dargestellte Zeitintervall Δt in einer realen Anwendung des erfindungsgemäßen Verfahrens in der Regel kleiner gewählt wird bzw. zu wählen ist, als dieses vorliegend aus Gründen der Darstellbarkeit gewählt wurde.

Vorliegend wurde t₁ dadurch bestimmt, dass die Amplitude A im Zeitverlauf jeweils den (Absolut-)Wert A₁ erreicht hat. Alternativ ist es jedoch auch möglich, dass ein erster Signalanstieg in der Amplitude über einen Schwellenwert einen Trigger-Zeitpunkt darstellt und das Funkautorisierungssystem das erste Sampling 3 in der Folge als ersten Ist-Wert wählt.

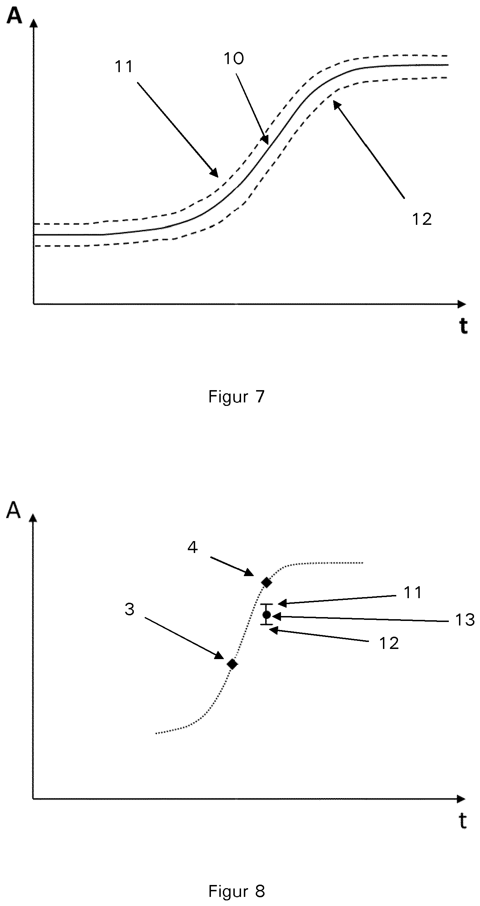

Nachfolgend werden dann zum Zeitpunkt t₂, insbesondere unter Beachtung des Zeitintervalls Δt als zeitlicher Abstand zwischen t₁ und t₂, für die Amplitude A die (Absolut-)Werte A₂ erfasst. Im dargestellten Beispiel weichen die Amplitudenwerte A₂ des Freigabesignals 1 und des Angriffssignal 2 deutlich voneinander ab. Diesen Unterschied der Signale verwendet das erfindungsgemäße Verfahren zur Erkennung eines Angriffs bzw. zur Verweigerung einer Freigabe (dies wird anhand der Figuren 8 bis 10 detaillierter erläutert), insbesondere auch dann, wenn etwaige codierte und zur Freigabe notwendige Informationen korrekt in dem Eingangssignal hinterlegt sind.

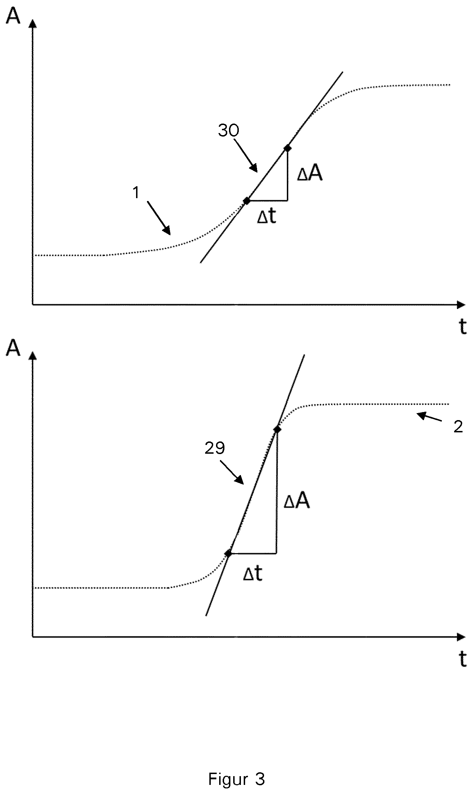

In Ergänzung, respektive alternativ zu Figur 2, zeigt Figur 3 die Betrachtung relativer Werte für die Amplitude A. Dabei wird in Figur 3 jeweils mittels Steigungsdreieck für die Signale aus Figur 2 eine Änderungsrate als Quotient der Amplitudenänderung ΔA und des Zeitintervalls Δt ermittelt. Es wird ersichtlich, dass die aus dem Steigungsdreieck resultierende Gerade 29 für das Angriffssignal 2 (unten) verglichen mit der Gerade 30 für das Freigabesignal 1 (oben) deutlich steiler ist. Alternativ kann anstelle der Änderungsrate, insbesondere bei Wahl eines konstanten Δt, auch ΔA als Differenz |A₂ - A₁| oder Verhältnis A₂/A₁ der Messwerte für die Amplitude A der beiden Samplings 3,4 bestimmt sein/werden. Auch bei derartigen Bestimmungen fallen Differenz bzw. Verhältnis für das Angriffssignal 2 größer aus vergleichen mit dem Freigabesignal 1.

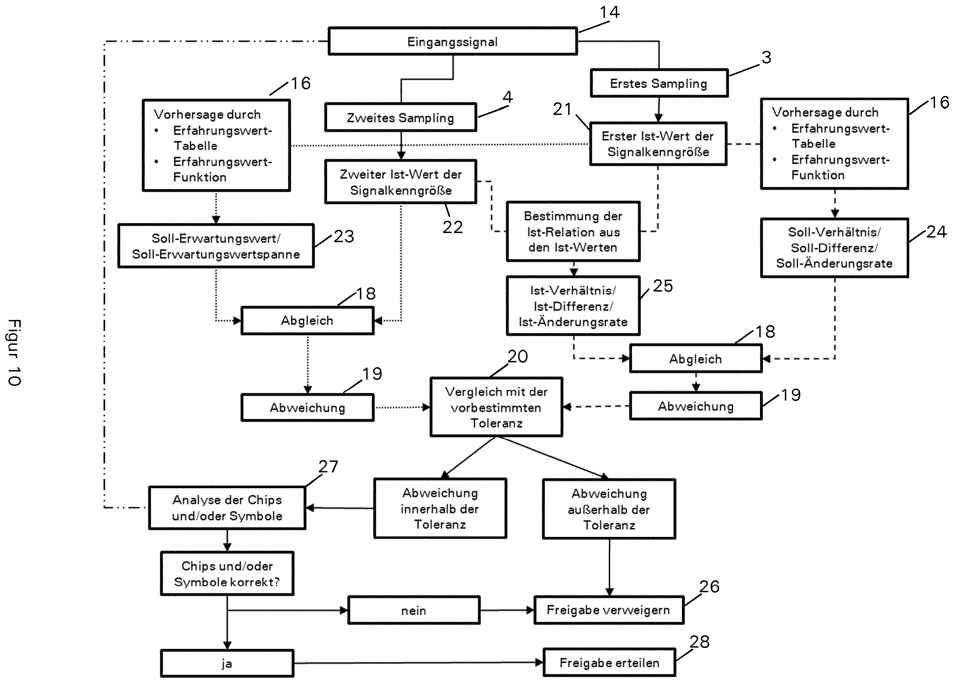

Figur 4 zeigt eine vorteilhafte Weiterbildung des erfindungsgemäßen Verfahrens. In Figur 4 werden im Vergleich zu den Figuren 2 und 3 neben den zwei Samplings 3,4 vorliegend beispielhaft weitere Samplings 5,6,7 in Form eines dritten Samplings 5, eines vierten Samplings 6 und eines fünften Samplings 7 durchgeführt. Aus diesen Samplings 3,4,5,6,7 können eine Vielzahl von Sampling-Paaren aus erfindungsgemäßem ersten und zweiten Sampling zusammengestellt werden, welche jeweils einzeln betrachtet werden können. Dabei wird vorteilhafterweise bereits eine Freigabe verweigert bzw. das Signal als fremd erkannt, falls in einem der Sampling-Paare eine signifikante Abweichung zu einem Freigabesignal erkannt wird (siehe dazu auch Figuren 8 und 10 sowie der dazugehörigen Figurenbeschreibung).

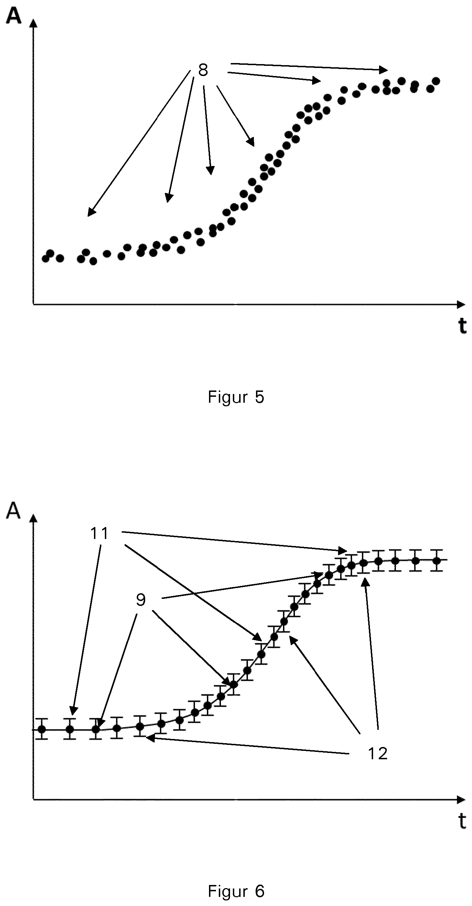

Betrachtet man die in Figur 4 dargestellten Beispiele für Samplings, welche zeitlich jeweils äquidistant sind, so zeigen sich die Vorteile des Vorgehens mit einer Mehrzahl von Messungen. Bildet man beispielsweise ein Sampling-Paar aus den Samplings 5 und 6 für das Angriffssignal 2 führt dies auf Basis eines "LookUps" (das "LookUp" wird im Zusammenhang mit dem Figuren 5 bis 10 weitergehend erläutert) auf Basis des Samplings 5 zu einem Soll-Wert für das Sampling 6, der, wenn man das Freigabesignal 1 betrachtet sehr ähnlich dem Sampling 7 auf Basis eines Lookups des Samplings 6 sein wird. Somit lässt sich an dieser Stelle im Signalverlauf erfindungsgemäß nur schwer eine Unterscheidung zwischen Angriffssignal 2 und Freigabesignal 1 treffen. Um eine Entscheidung zu ermöglichen, muss die Toleranz sehr klein gewählt werden, was allerdings zu übermäßig vielen Ablehnungen führen kann, da die Einflüsse unterschiedlicher Übertragungsbedingungen dann auch aus der Toleranz herausführen können.

Betrachtet man jedoch andere mögliche Sampling-Paare des Angriffssignals, so ergeben sich für solche signifikante Abweichungen zur Soll-Relation, die auf einem Freigabesignal beruht, so beispielsweise für Paare welche jeweils aus den Samplings 3 und 5 als erfindungsgemäße ersten und zweite Samplings gebildet sind. Dies lässt sich leicht erkennen, wenn betrachtet, dass die Amplituden A₁ des Freigabesignals 1 und des Angriffssignals 2 ähnlich sind, die Amplituden A₃ jedoch eine signifikante Abweichung voneinander zeigen.

Problematisch ist die Betrachtung eines Paares von Samplings immer dann, wenn die Amplitudenänderung innerhalb des Zeitintervalls besonders klein ausfällt, so in der Regel zu Beginn und Ende des Amplitudenanstiegs in einer Signalflanke. Die Zeitpunkte für erfindungsgemäße erste und zweite Samplings sind insbesondere insofern vorteilhafterweise so zu wählen, dass die Samplings im mittleren Bereich der Signalflanke genommen werden bzw. der mittlere Bereich die Samplings umfasst, folglich in einem Bereich der Signalflanke genommen werden, in welchem tendenziell eine hohe Änderungsrate der Amplitude beobachtet werden kann. Dabei ist jedoch auch insbesondere die erwartete zeitliche Komprimierung von dem Funkautorisierungssystem fremden Signalen zu beachten, aus welcher resultiert, dass vorteilhafterweise bereits früh im Zeitverlauf des Signalanstiegs einer Signalflanke Samplings vorteilhafterweise durchgeführt werden.

Die Figuren 5 bis 7 veranschaulichen eine erfindungsgemäße Kalibrierung, welche zur Durchführung eines erfindungsgemäßen Verfahrens in einem erfindungsgemäßen Funkautorisierungssystem vorgenommen werden kann. Hierbei zeigt Figur 5 eine Punktwolke aus Kalibrierdaten 8, welche zur Kalibrierung verwendet werden können. Zu beachten ist insbesondere, dass auch die Basis-Linie als auch die Werte maximaler Amplitude Schwankungen unterliegen, insbesondere beispielsweise aus Grundrauschen des eingesetzten Empfängers bzw. aufgrund unterschiedlicher äußerer Einflüsse bei Messung der Kalibrierdaten 8. Die Kalibrierdaten stammen dabei aus, insbesondere mehrmaliger, Messung von Freigabesignalen. Diese Messungen von Kalibrierdaten können dabei insbesondere innerhalb einer sicheren Umgebung in einem erfindungsgemäßen Funkautorisierungssystem hinterlegt werden, so beispielsweise vor Verkauf bzw. Auslieferung eines solchen, insbesondere auch während einer Nachrüstung bestehender Systeme. Insbesondere können diese Kalibrierdaten nachfolgend auch um die Messwerte von, insbesondere im Betrieb des Funkautorisierungssystem, mittels des erfindungsgemäßen Verfahrens erfasster Freigabesignal erweitert und/oder ersetzt werden. Dabei können die initialen Kalibrierdaten und "neue" Kalibierdaten insbesondere unter Gewichtung, so beispielsweise hinsichtlich Entstehungsdatum, in die Kalibierdaten eingehen, insbesondere um so beispielsweise die Kalibrierung anpassen zu können, insbesondere falls sich eine Verschlechterung der eingesetzten Komponenten des Funkautorisierungssystems, beispielsweise durch Alterung, ergibt.

Aus diesen Kalibrierdaten 8 können mittels statistischer Methoden, wie zum Beispiel Mittelwert, Median, Quartil, Quantil, Konfidenzintervall, Konfidenzbereich, Varianz und/oder Standardabweichung, sowohl diskrete (siehe Figur 6) Erfahrungswerte 9 als auch kontinuierliche Erfahrungswerte 10 (siehe Figur 7) für Freigabesignale abgeleitet werden, welche dann als Erfahrungswerttabelle respektive Erfahrungswertfunktion auf einem erfindungsgemäßen Funkautorisierungssystem hinterlegt werden. Sowohl Erfahrungswerttabelle als auch Erfahrungswertfunktion bilden dabei den erwarteten zeitlichen Verlauf eines Freigabesignals ab und dienen zur Ermittlung der Soll-Relation in Form von Soll-Erwartungswertspannen bzw. Erwartungswerten für die Amplitude eines erfindungsgemäßen zweiten Samplings und/oder Soll-Differenz, Soll-Verhältnis und/oder Soll-Änderungsrate zwischen den Amplituden des erfindungsgemäßen zweiten Samplings und des dazugehörigen erfindungsgemäßen ersten Samplings.

Darüber hinaus kann anhand der Kalibrierdaten auch eine erfindungsgemäße Toleranz bestimmt sein, dies insbesondere ebenfalls mit Hilfe und/oder unter Beachtung der bereits genannten statistischen Methoden. In Figur 6 wird diese als Fehlerbalken mit den Toleranzgrenzen 11,12 dargestellt. Im Fall kontinuierlicher Erwartungswerte ergibt sich, wie auch aus Figur 7 ersichtlich (siehe gestrichelte Linie) auch für die vorbestimmte Toleranz jeweils eine Funktion für deren obere 11 und untere Toleranzgrenze 12.

Bei der Bestimmung bzw. Auswahl der Toleranzgrenzen 11,12 sind insbesondere auch die dem Funkautorisierungssystem innewohnenden Schwankungen hinsichtlich der systemeigenen Freigabesignale zu beachten, sodass Freigabesignale bzw. Signale des Funkautorisierungssystem nicht fälschlicherweise als systemfremd gewertet werden. Bezeichnete Schwankungen können dabei insbesondere von äußeren Einflüssen wie beispielsweise Temperatur, aber auch durch Abhängigkeit von den verwendeten Frequenzen der Signale aber auch von der Qualität sowie der Alterung von Systemkomponenten und Umgebungseinflüssen abhängen.

Für den Fall, dass die Soll-Relation durch eine Soll-Erwartungswertspanne geben ist, so kann die Soll-Erwartungswertspanne in analoger Weise bereits die beschriebenen Schwankungen zumindest teilweise umfassen. Darüber hinaus kann die Soll-Erwartungswertspanne zusätzlich um die vorbestimmten Toleranz erweitert werden, wobei die vorbestimmte Toleranz dann die Soll-Erwartungswertspanne umschließt, wodurch ein gemeinsamer Vertrauensbereich gebildet wird. Selbiger Vertrauensbereich kann jedoch auch erhalten werden, wenn anstelle einer Soll-Erwartungswertspanne ein Soll-Erwartungswert verwendet wird, welcher von einer entsprechend größeren Toleranz umschlossen ist. Beide Vorgehensweisen können insofern zu einem identischen Ergebnis hinsichtlich des Vertrauensbereich führen, wenn gleich sich die einzelnen Verfahrensschritte dieser Ausgestaltungen des erfindungsgemäßen Verfahrens unterscheiden. Insofern können die Varianten Soll-Erwartungswert plus vorbestimmte Toleranz und Soll-Erwartungswertspanne plus vorbestimmte Toleranz für den Vertrauensbereich bei der Betrachtung eines einzelnen Paars als äquivalent angesehen werden, führen respektive zum selben bzw. zu einem identischen Vertrauensbereich. Eine Soll-Erwartungswertspanne kann dabei insbesondere auch bereits analog einer Kombination zwischen Soll-Erwartungswert und vorbestimmter Toleranz aufgefasst werden.

Es kann jedoch auch vorgesehen sein, im Falle von mehr als zwei Samplings, zunächst den Abgleich paarweise für jeweils ein erfindungsgemäßes erstes und zweites Sampling durchzuführen und die dabei ermittelten einzelnen Abweichungen aller paarweise zusammengefassten Samplings gemeinsam als Gesamtabweichung oder eine durchschnittliche Abweichung dieser Abweichungen zu betrachten und ebendiese zum Vergleich mit der vorbestimmten Toleranz zu verwenden. Wird nun insbesondere eine Soll-Erwartungswertspanne als Soll-Relation für die einzelnen paarweise zusammengefassten Samplings verwendet, so fallen Soll-Werterwartungswertspanne und vorbestimmte Toleranz gerade nicht zusammen.

Figur 8 zeigt eine schematische Darstellung eines als Eingangssignals gemessenen Angriffssignals 2 umfassend ein erstes Sampling 3, eine Vorhersage eines Soll-Erwartungswerts 13 auf Basis des ersten Samplings 3 und ein zweites Sampling 4. Der Soll-Erwartungswert 13 ist dabei anhand der Amplitude des ersten Samplings 3 aus den Erfahrungswerttabelle bzw. Erfahrungswertfunktion analog zu Figur 6 oder 7 bestimmt. Innerhalb des erfindungsgemäßen Verfahrens findet ein Abgleich zwischen dem im zweiten Sampling 4 ermittelten Wert für die Amplitude statt. Es wird ersichtlich, dass die Amplitude des zweiten Samplings 4 von dem Soll-Erwartungswert 13 deutlich abweicht. Diese Abweichung befindet sich zudem außerhalb der sich um den Soll-Erwartungswert 13 befindlichen Toleranzgrenzen 11,12. Das erfindungsgemäße Funkautorisierungssystem wertet das empfangen Eingangssignal 2 in der Folge als ein dem Funkautorisierung fremdes Signal bzw. als Angriff und verweigert in der Folge eine Freigabe.

Es sei darauf hingewiesen, dass die Darstellungen der Figuren 1 bis 8, obgleich ein Beispiel gewählt wurde, in welcher die Signalkenngröße eine Amplitude ist, gleichermaßen auch - unter entsprechenden Anpassungen - Gültigkeit für Verfahren haben, in welchen anstelle der Amplitude eine Phase als Signalkenngröße betrachtet wird.

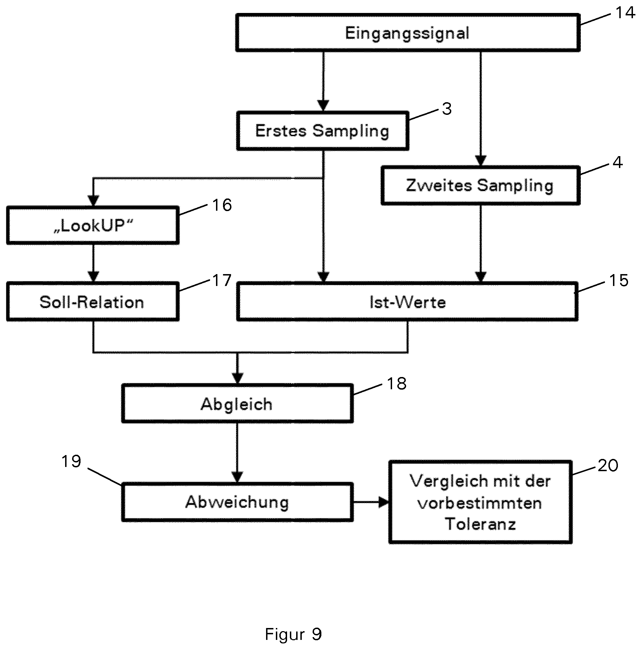

Figur 9 zeigt eine schematische Darstellung einzelner Verfahrensschritte eines erfindungsgemäßen Verfahrens als Blockdiagramm. Zunächst wird ein Eingangssignal 14 durch das Funkautorisierungssystem, insbesondere an einem ersten Objekt, empfangen. An dem Eingangssignal 14 werden in der Folge das erste Sampling 3 und das zweite Sampling 4 durchgeführt. Durch die Samplings 3,4 werden Ist-Werte 15 für mindestens eine Signalkenngröße, insbesondere Amplitude und/oder Phase, im Zeitverlauf des Eingangssignals 14 ermittelt. Der Ist-Wert des ersten Samplings 3 wird darüber hinaus im "LookUp" 16 verwendet. Im "LookUp" 16 wird dem Ist-Wert des ersten Samplings 3 eine Soll-Relation 17 zugeordnet. Die Soll-Relation 17 wird dann mit den Ist-Werten 15 der Samplings 3,4 abgeglichen. Durch dieses Abgleich 18 wird die Abweichung 19 ermittelt, welche im Anschluss mit der vorbestimmten Toleranz 20 vergleichen wird. Aus Basis des Vergleichs von Abweichung 19 und Toleranz 20 kann das Funkautorisierungssystem in der Folge feststellen, ob es sich um ein fremdes Signal handelt und somit eine Freigabe zu verweigern ist.

Figur 10 zeigt in detaillierter Art und Weise zwei vorteilhafte Weiterbildung des in Figur 9 dargestellten Verfahrens, wobei diese durch unterschiedliche Gestaltung der Verbindungspfeile (gestrichelt bzw. gepunktet) kenntlich gemacht sind. Das erste Sampling 3 und zweite Sampling 4 des Eingangssignals 14 erfolgt analog zu Figur 9 bzw. analog zur Vorgehensweise in den Figuren 2 bis 4, zur Ermittlung des ersten Ist-Werts 21 der Signalkenngröße, insbesondere Amplitude und/oder Phase und des zweiten Ist-Werts 22 der Signalkenngröße, insbesondere Amplitude und/oder Phase.

In der ersten Variante, welche durch gepunktete Pfeile dargestellt ist, wird aus einem ersten Ist-Wert 21 des ersten Samplings 3 durch Vorhersage mittels Erfahrungswerttabelle bzw. Erfahrungswertfunktion als "LookUp" 16 ein absoluter Soll-Wert 23, insbesondere eine Soll-Erwartungswertspanne oder ein Soll-Erwartungswert, als Soll-Relation ermittelt. Es erfolgt der Abgleich 18 des zweiten Ist-Werts 22 mit dem absoluten Soll-Wert 23 zur Ermittlung der Abweichung 19.

In der zweiten Variante, welche durch gestrichelte Pfeile dargestellt ist, wird aus einem ersten Ist-Wert 21 des ersten Samplings 3 durch Vorhersage mittels Erfahrungswerttabelle bzw. Erfahrungswertfunktion als "LookUp" 16 ein relativer Soll-Wert 24, insbesondere ein Soll-Verhältnis, eine Soll-Differenz und/oder eine Soll-Änderungsrate, für die Soll-Relation ermittelt. Darüber hinaus wird aus dem ersten Ist-Wert 21 und dem zweiten Ist-Wert 22 eine Ist-Relation 25, insbesondere ein Ist-Verhältnis, eine Ist-Differenz und/oder eine Ist-Änderungsrate, ermittelt, welche in der Folge mit dem relativen Soll-Wert 24 abgeglichen wird. Durch diesen Abgleich 18 wird der Abweichung 19 ermittelt.

Die in beiden Varianten verwendeten Erfahrungswerttabellen bzw. Erfahrungswertfunktionen können analog zu den Figuren 5 bis 7 bestimmt sein/werden. Ferner wird in beiden Varianten die ermittelte Abweichung 19 mit der vorbestimmten Toleranz 20 vergleichen. Auch die vorbestimmte Toleranz kann analog zu den Figuren 5 bis 7 bestimmt sein/werden.

Liegt die Abweichung außerhalb der vorbestimmten Toleranz, so wird das Eingangssignal 14 als dem Funkautorisierungssystem fremdes Signal erkannt bzw. gewertet und eine Verweigerung der Freigabe 26 erfolgt.

Liegt die Abweichung innerhalb der vorbestimmten Toleranz, so wird das Eingangssignal 14 nicht als dem Funkautorisierungssystem fremdes Signal gewertet. In der Folge wird eine Analyse 27 der in dem Eingangssignal 14 codierten Informationen, insbesondere in Form von Symbolen und/oder Chips, angestoßen, dafür wird auf das Eingangssignal bzw. dessen Informations-Inhalt zurückgegriffen (siehe gestrichelt-gepunktete Linie). Ergibt die Analyse der Informationen, dass diese korrekt sind, so wird erfolgt die Erteilung der Freigabe 28. Andernfalls erfolgt die Verweigerung der Freigabe 26.

Analyse des Zeitverlaufs der Signalkenngröße des Eingangssignals 14 nach dem erfindungsgemäßen Verfahren und die Analyse 27 der im Eingangssignal hinterlegten Information kann hierbei auch in umgekehrter Reihenfolge bzw. simultan erfolgen.

### Bezugszeichen:

| | | | |
|---|---|---|---|
| 1 | Freigabesignal | 16 | LookUp |
| 2 | Angriffssignal | 17 | Soll-Relation |
| 3 | Sampling | 18 | Abgleich |
| 4 | Sampling | 19 | Abweichung |
| 5 | Sampling | 20 | vorbestimmte Toleranz |
| 6 | Sampling | 21 | erster Ist-Wert |
| 7 | Sampling | 22 | zweiter Ist-Wert |
| 8 | Kalibrierdaten | 23 | absoluter Soll-Wert |
| 9 | diskrete Erfahrungswerte | 24 | relativer Soll-Wert |
| 10 | kontinuierliche Erfahrungswerte | 25 | Ist-Relation |
| 11 | obere Toleranzgrenze | 26 | Verweigerung der Freigabe |
| 12 | untere Toleranzgrenze | 27 | Analyse der codierten Informationen |
| 13 | Soll-Erwartungswert | 28 | Erteilung der Freigabe |
| 14 | Eingangssignal | 29 | Gerade |
| 15 | Ist-Werte | 30 | Gerade |

## Patentansprüche

1. Verfahren zur Entscheidung über die Herbeiführung einer Freigabe in einem Funkautorisierungssystem aufweisend mindestens ein erstes und ein zweites Objekt, wobei die Entscheidung über die Herbeiführung der Freigabe auf mindestens einer Änderung mindestens einer Signalkenngröße im Zeitverlauf eines an dem mindestens einen ersten Objekt empfangenen Eingangssignals (14) basiert und die mindestens eine Signalkenngröße eine Amplitude und/oder Phase ist und/oder beinhaltet,
wobei des Funkautorisierungssystems eingerichtet ist, eine Vielzahl von Symbolen und/oder Chips mit einer ersten Symbol- oder Chiprate in mindestens einem ersten analogen Datensignal codiert von dem ersten zu dem zweiten Objekt und/oder von dem zweiten zu dem ersten Objekt zu übertragen und durch ein Freigabesignal des zweiten Objekts an das erste Objekt die Freigabe herbeizuführen,
wobei das Freigabesignal mindestens eine vorbestimmte Änderung der mindestens einen Signalkenngröße im Zeitverlauf aufweist und ausschließlich auf Basis von im Funkautorisierungssystem vorbestimmten Daten und/oder auf Basis von Signalen des Funkautorisierungssystem durch das Funkautorisierungssystem bestimmt ist und/oder wird und Teil des mindesten einen ersten analogen Datensignals ist,
wobei beim Empfang des Eingangssignals am ersten Objekt Samplings der mindestens einen Signalkenngröße des empfangenen Eingangssignals derart genommen werden, dass zumindest ein erstes Sampling (3) zu einem ersten Zeitpunkt und ein zweites Sampling (4) zu einem zweiten Zeitpunkt erfolgt, insbesondere in einem vorbestimmtem zeitlichen Abstand zwischen erstem und zweitem Zeitpunkt,
wobei durch das mindestens eine erste Sampling mindestens ein erster Ist-Wert (15) für die mindestens eine Signalkenngröße und durch das mindestens
eine zweite Sampling mindestens ein zweiter Ist-Wert (15) für die mindestens
eine Signalkenngröße ermittelt wird,
wobei mindestens eine Soll-Relation (17) durch das Funkautorisierungssystem ausschließlich basierend auf im Funkautorisierungssystem vorbestimmten Daten und/oder basierend auf Signalen des Funkautorisierungssystems, insbesondere anhand der vorbestimmten Änderung der mindestens einen Signalkenngröße im Zeitverlauf des Freigabesignals, bestimmt ist und/oder wird,
wobei durch Abgleich (18) des mindestens einen ersten und mindestens einen zweiten Ist-Werts mit der mindestens einen Soll-Relation mindestens eine Abweichung (19) bestimmt wird und
a. das empfangene Eingangssignal als Angriff und/oder als ein dem Funkautorisierungssystem fremdes Signal gewertet und/oder eine Freigabe verwehrt wird, falls die mindestens eine Abweichung außerhalb einer vorbestimmten Toleranz liegt, und/oder
b. als ein Signal des Funkautorisierungssystem gewertet wird und/oder durch das Funkautorisierungssystem als Freigabesignal erkannt wird und/oder eine Freigabe bewirkt wird, falls die mindestens eine Abweichung innerhalb der vorbestimmten Toleranz liegt,
wobei das zweite Objekt eingerichtet ist, das Freigabesignal derart auszusenden, dass die mindestens eine Abweichung des mindestens einen ersten und mindestens einen zweiten Ist-Werts der zeitlichen Änderung der mindestens einen Signalkenngröße, insbesondere eines am ersten Objekt als Eingangssignals empfangenen Freigabesignals, von der mindestens einen Soll-Relation innerhalb der vorbestimmten Toleranz liegt.

2. Verfahren nach Anspruch 1, wobei die Soll-Relation durch eine Soll-Erwartungswertspanne, insbesondere einen Soll-Erwartungswert, bestimmt wird/ist.

3. Verfahren nach Anspruch 2, wobei die Soll-Erwartungswertspanne, insbesondere der Soll-Erwartungswert, eine Soll-Wert-spanne, insbesondere ein Soll-Wert, für den im mindestens einen zweiten Sampling erwarteten zweiten Ist-Wert der mindestens einen Signalkenngröße, und/oder ein Soll-Verhältnis und/oder eine Soll-Differenz und/oder eine Soll-Änderungsrate zwischen der mindestens einen Signalkenngröße des mindestens einen ersten und des mindestens einen zweiten Samplings ist, insbesondere im Zeitintervall zwischen erstem und zweitem Zeitpunkt, ist.

4. Verfahren nach Anspruch 3, wobei die Soll-Erwartungswertspanne, insbesondere der Soll-Erwartungswert, durch das Funkautorisierungssystem dem mindestens einen ersten Ist-Wert zugeordnet wird und/oder auf Basis des mindestens einen Ist-Werts bestimmt wird/ist.

5. Verfahren nach Anspruch 4, wobei die Sollwertspanne, insbesondere der Soll-Wert, für den im mindestens einen zweiten Sampling erwarteten zweiten Ist-Wert der mindestens einen Signalkenngröße aus dem ersten Ist-Wert mittels des Soll-Verhältnis und/oder der Soll-Differenz und/oder der Soll-Änderungsrate errechnet wird und insbesondere zum Abgleich die errechnete Sollwertspanne, insbesondere der Soll-Wert, mit dem Ist-Wert des zweiten Samplings verglichen wird.

6. Verfahren nach einem der vorherstehenden Ansprüche, wobei aus dem ersten und zweiten Ist-Wert eine Ist-Relation der zeitlichen Änderung der mindestens einen Signalkenngröße des empfangenen Eingangssignals ermittelt und die Ist-Relation mit der Soll-Relation abgeglichen wird,
wobei die Ist-Relation insbesondere als ein Ist-Verhältnis oder eine Ist-Differenz zwischen den mindestens einen Signalkenngrößen des mindestens einen ersten Samplings und des mindestens einen zweiten Samplings oder als eine zeitliche Änderungsrate der mindestens einen Kenngröße des Eingangssignals im Zeitintervall zwischen erstem und zweitem Zeitpunkt bestimmt wird/ist.

7. Verfahren nach Anspruch 6, soweit rückbezogen auf Anspruch 3, wobei zum Abgleich von Ist-Relation und Soll-Relation das Ist-Verhältnis mit dem Soll-Verhältnis oder die Ist-Differenz mit der Soll-Differenz oder die die zeitliche Änderungsrate mit der Soll-Änderungsrate verglichen wird.

8. Verfahren nach einem der vorherstehenden Ansprüche, wobei die Bestimmung der Soll-Relation und/oder der vorbestimmten Toleranz auf Basis von Kalibrierdaten für die mindestens eine vorbestimmte Änderung der mindestens einen Signalkenngröße im Zeitverlauf erfolgt, wobei die Kalibrierdaten aus einer Vielzahl gemessener Freigabesignale stammen,
wobei insbesondere anhand der Kalibierdaten eine Erfahrungswerttabelle und/oder eine Erfahrungswertfunktion auf dem Funkautorisierungssystem erzeugt wird und in dem Funkautorisierungssystem hinterlegt wird/ist und/oder
wobei insbesondere initiale Kalibrierdaten aus der Vielzahl gemessener Freigabesignale durch Daten von als Eingangssignal gemessenen Freigabesignalen ergänzt und/oder zu mindestens teilweise ersetzt werden, insbesondere unter Gewichtung der Daten, insbesondere hinsichtlich ihres Entstehungszeitpunkts.

9. Verfahren nach Anspruch 8, wobei aus den Kalibrierdaten mindestens eine statistische Kenngröße, insbesondere Mittelwert, Median, Quartil, Quantil, Konfidenzintervall, Konfidenzbereich, Varianz und/oder Standardabweichung, ermittelt wird und die statistische Kenngrößen, insbesondere Mittelwert, Median, Quartil, Quantil, Konfidenzintervall, Konfidenzbereich, Varianz und/oder Standardabweichung, zur Bestimmung der Soll-Relation, insbesondere soweit auf Anspruch 2 rückbezogen, die Soll-Erwartungswertspanne, insbesondere des Soll-Erwartungswerts, und/oder der vorbestimmten Toleranz verwendet wird.

10. Verfahren nach einem der vorherstehenden Ansprüche, wobei die vorbestimmte Toleranz 80% oder weniger der Signalkenngrößenänderung in der Signalflanke beträgt und/oder **dadurch gekennzeichnet, dass** der erste und zweite Zeitpunkt einen zeitlichen Abstand im Bereich von 1/16 bis 1/4 der Periode des Funksignals und/oder im Bereich von 50ns bis 250ns aufweisen.

11. Verfahren nach einem der vorherstehenden Ansprüche, wobei eine Mehrzahl Samplings an dem empfangenen Eingangssignal durchgeführt wird und zwei aus der Mehrzahl Samplings jeweils als Paar aus erstem und zweiten Sampling betrachtet werden, wobei die jeweiligen Paare jeweils mit der Soll-Relation abgeglichen werden, wobei die Paare insbesondere zeitlich gegeneinander im Zeitverlauf des Eingangssignals zumindest teilweise versetzt sind, insbesondere sich aneinander zeitlich anschließen und/oder überlappen,
wobei insbesondere das erste Sampling eines zweiten der Paare dem zweiten Sampling eines ersten der Paare entspricht und/oder wobei insbesondere eine Freigabe verwehrt wird, wenn die Abweichung eines der Paare der Mehrzahl Samplings außerhalb der vorbestimmten Toleranz liegt.

12. Funkautorisierungssystem mit einem ersten Transceiver in und/oder an einem ersten Objekt und einem zweiten Transceiver in und/oder an einem zweiten Objekt,
wobei das Funkautorisierungssystem eingerichtet ist, vom ersten zum zweiten Transceiver eine Vielzahl von Symbolen und/oder Chips mit einer ersten Symbol- oder Chiprate in mindestens einem ersten analogen Datensignal codiert zu übertragen und vom zweiten zum ersten Transceiver eine Vielzahl von Symbolen und/oder Chips mit einer zweiten oder der ersten Symbol- oder Chiprate in mindestens einem zweiten analogen Datensignal codiert zu übertragen,
wobei das Funkautorisierungssystem eingerichtet ist zum Nehmen von Samplings von Ist-Werten mindestens einer Änderung mindestens einer Signalkenngröße im Zeitverlauf eines in einer Funkkommunikation zwischen dem ersten und zweiten Transceiver am ersten Transceiver empfangenen Eingangssignals, insbesondere zweiten analogen Datensignal, und ferner eingerichtet ist zum Abgleich der Ist-Werte der Samplings mit mindestens einer Soll-Relation zur Ermittlung mindestens einer Abweichung,
wobei die mindestens eine Signalkenngröße eine Amplitude und/oder Phase ist und/oder beinhaltet,
wobei das Funkautorisierungssystem eingerichtet ist,
a. das Eingangssignal als Angriff und/oder ein dem Funkautorisierungssystem fremdes Signal zu werten und/oder eine Freigabe verweigert wird, falls die Abweichung außerhalb mindestens einer vorbestimmten Toleranz liegt und/oder
b. das Eingangssignal als ein Signal des Funkautorisierungssystem zu werten und/oder als ein Freigabesignal zu erkennen und/oder eine Freigabe zu gewähren, falls die Abweichung innerhalb der mindestens einen vorbestimmten Toleranz liegt.
wobei das Funkautorisierungssystem eingerichtet ist, die Soll-Relation und/oder die vorbestimmte Toleranz ausschließlich auf im Funkautorisierungssystem vorbestimmten Daten und/oder Signalen des Funkautorisierungssystem, insbesondere anhand einer vorbestimmten Änderung der mindestens einen Signalkenngröße im Zeitverlauf eines Freigabesignals, zu bestimmen,
wobei der zweite Transceiver eingerichtet ist, das Freigabesignal so auszusenden, dass die Abweichung mindestens eines ersten und mindestens eines zweiten Ist-Werts von der mindestens einen Soll-Relation innerhalb der vorbestimmten Toleranz liegt,
wobei der zweite Transceiver und/oder das zweite Objekt eingerichtet ist, das Freigabesignal ausschließlich auf Basis von im Funkautorisierungssystem vorbestimmten Daten und/oder auf Basis von Signalen des Funkautorisierungssystems, insbesondere des mindestens einen ersten analogen Signals, zu bestimmen,
wobei der zweite Transceiver und/oder das zweite Objekt eingerichtet ist, das mindestens eine Freigabesignal als Teil des mindesten einen zweiten analogen Datensignals zu senden.

13. Funkautorisierungssystem nach Anspruch 12 aufweisend eine Zugangsbeschränkungsvorrichtung, wobei die Zugangsbeschränkungsvorrichtung eingerichtet ist, den Zugang zu gewähren oder zu verweigern, insbesondere mittels eines Zugangsbeschränkungsmittels, wobei die Zugangsbeschränkungsvorrichtung eingerichtet ist, den Zugang zu verweigern, falls die Abweichung der Ist-Werte des Eingangssignals außerhalb der mindestens einen vorbestimmten Toleranz liegt und/oder den Zugang zu gewähren, falls die Abweichung der Ist-Werte des Eingangssignals von der Soll-Relation innerhalb der mindestens einen vorbestimmten Toleranz liegt.

14. Funkautorisierungssystem nach einem der Ansprüche 12 oder 13, wobei der zweite Transceiver eingerichtet ist, das Freigabesignal so an den ersten Transceiver zu senden, dass falls die Abweichung der Ist-Werte des Freigabesignals von der Soll-Relation innerhalb der mindestens einen vorbestimmten Toleranz liegt.

## Claims

1. Method for deciding on the granting of authorisation in a radio authorisation system comprising at least a first and a second object, wherein the decision on the granting of authorisation is based on at least one change in at least one signal parameter over the course of time of an input signal (14) received at said at least one first object, and said at least one signal parameter is an amplitude and/phase, and/or includes, wherein the radio authorisation system is configured to transmit a plurality of symbols and/or chips with a first symbol or chip rate in at least one first analogue data signal encoded from the first to the second object and/or from the second to the first object, and to bring about the release by means of a release signal from the second object to the first object,
wherein the release signal has at least one predetermined change in said at least one signal parameter over time and is determined exclusively on the basis of data predetermined in the radio authorisation system and/or on the basis of signals from the radio authorisation system by the radio authorisation system and/or is part of said at least one first analogue data signal, whereby, upon reception of the input signal at the first object, samples of said at least one signal parameter of the received input signal are taken in such a way that at least a first sample (3) is taken at a first point in time and a second sample (4) takes place at a second point in time, in particular at a predetermined time interval between the first and second points in time, wherein said at least one first sampling determines at least one first actual value (15) for said at least one signal parameter and said at least one second sampling determines at least one second actual value (15) for said at least one signal parameter,
whereby at least one target relation (17) is determined by the radio authorisation system exclusively based on data predetermined in the radio authorisation system and/or based on signals from the radio authorisation system, in particular on the basis of the predetermined change in said at least one signal parameter over the time course of the release signal, and/or
whereby at least one deviation (19) is determined by comparing (18) said at least one first and at least one second actual value with said at least one target relation, and
a. the received input signal is evaluated as an attack and/or as a signal foreign to the radio authorisation system and/or authorisation is denied if said at least one deviation lies outside a predetermined tolerance, and/or
b. is evaluated as a signal from the radio authorisation system and/or is recognised by the radio authorisation system as an authorisation signal and/or authorisation is granted if said at least one deviation lies within the predetermined tolerance,
wherein the second object is set up to transmit the release signal in such a way that said at least one deviation of said at least one first and at least one second actual value of the temporal change of said at least one signal parameter, in particular a release signal received at the first object as an input signal, lies within the predetermined tolerance of said at least one target relation.

2. Method according to claim 1, wherein the target relation is determined by a target expected value range, in particular a target expected value.

3. Method according to claim 2, wherein the target expected value range, in particular the target expected value, is a target value range, in particular a target value, for the second actual value of said at least one signal parameter expected in said at least one second sampling, and/or a target ratio and/or a target difference and/or a target rate of change between said at least one signal parameter of said at least one first and said at least one second sampling, in particular in the time interval between the first and second points in time.

4. Method according to claim 3, wherein the target expected value range, in particular the target expected value, is assigned to said at least one first actual value by the radio authorisation system and/or is determined/is determined on the basis of said at least one actual value.

5. Method according to claim 4, wherein the target value range, in particular the target value, for the second actual value of said at least one signal parameter expected in said at least one second sampling is calculated from the first actual value by means of the target ratio and/or the target difference and/or the target rate of change, and in particular, for the purpose of comparison, the calculated target value range, in particular the target value, is compared with the actual value of the second sampling.

6. Method according to one of the preceding claims, wherein an actual relation of the temporal change of said at least one signal parameter of the received input signal is determined from the first and second actual values and the actual relation is compared with the target relation, wherein the actual relation is determined in particular as an actual ratio or an actual difference between said at least one signal parameter of said at least one first sampling and said at least one second sampling, or as a rate of change over time of said at least one parameter of the input signal in the time interval between the first and second points in time.

7. Method according to claim 6, insofar as it relates back to claim 3, wherein, in order to compare the actual ratio and the target ratio, the actual ratio is compared with the target ratio or the actual difference is compared with the target difference or the rate of change over time is compared with the target rate of change.

8. Method according to one of the preceding claims, wherein the determination of the target ratio and/or the predetermined tolerance is based on calibration data for said at least one predetermined change in said at least one signal parameter over time, wherein the calibration data originate from a plurality of measured release signals,
wherein, in particular, an empirical value table and/or an empirical value function is generated on the radio authorisation system on the basis of the calibration data and is stored in the radio authorisation system, and/or
where, in particular, initial calibration data from the plurality of measured release signals is supplemented and/or at least partially replaced by data from release signals measured as input signals, in particular by weighting the data, in particular with regard to the time at which it was generated.

9. Method according to claim 8, wherein at least one statistical parameter, in particular mean value, median, quartile, quantile, confidence interval, confidence range, variance and/or standard deviation, is determined from the calibration data and the statistical parameters, in particular mean value, median, quartile, quantile, confidence interval, confidence range, variance and/or standard deviation, are used to determine the target relation, in particular as referred to in claim 2, the target expected value range, in particular the target expected value, and/or the predetermined tolerance.

10. Method according to one of the preceding claims, wherein the predetermined tolerance is 80% or less of the signal parameter change in the signal edge and/or **characterised in that** the first and second points in time have a time interval in the range from 1/16 to 1/4 of the period of the radio signal and/or in the range from 50ns to 250ns.

11. Method according to one of the preceding claims, wherein a plurality of samples are taken from the received input signal and two of the plurality of samples are each considered as a pair of first and second samples, wherein the respective pairs are each compared with the target relationship, wherein the pairs are in particular at least partially offset from each other in time over the time course of the input signal, in particular follow each other in time and/or overlap, in particular the first sampling of a second of the pairs corresponds to the second sampling of a first of the pairs and/or in particular, approval is denied if the deviation of one of the pairs of the plurality of samples is outside the predetermined tolerance.

12. Radio authorisation system with a first transceiver in and/or on a first object and a second transceiver in and/or on a second object,
wherein the radio authorisation system is set up to transmit a plurality of symbols and/or chips encoded at a first symbol or chip rate in at least one first analogue data signal from the first to the second transceiver and to transmit a plurality of symbols and/or chips encoded at a second or the first symbol or chip rate in at least one second analogue data signal from the second to the first transceiver,
wherein the radio authorisation system is configured to take samples of actual values of at least one change in at least one signal parameter over time of an input signal received at the first transceiver in a radio communication between the first and second transceivers, in particular a second analogue data signal, and is further configured to compare the actual values of the samples with at least one target relation to determine at least one deviation, wherein said at least one signal parameter is and/or includes an amplitude and/or phase,
wherein the radio authorisation system is configured to
a. evaluate the input signal as an attack and/or a signal foreign to the radio authorisation system and/or refuse authorisation if the deviation lies outside at least one predetermined tolerance and/or
b. evaluate the input signal as a signal of the radio authorisation system and/or recognise it as an authorisation signal and/or grant authorisation if the deviation lies within said at least one predetermined tolerance.
wherein the radio authorisation system is configured to determine the target relation and/or the predetermined tolerance exclusively on the basis of data and/or signals of the radio authorisation system predetermined in the radio authorisation system, in particular on the basis of a predetermined change in at least one signal parameter over the time course of an authorisation signal,
wherein the second transceiver is configured to transmit the release signal in such a way that the deviation of at least one first and at least one second actual value from said at least one target relation lies within the predetermined tolerance,
wherein the second transceiver and/or the second object is configured to determine the release signal exclusively on the basis of data predetermined in the radio authorisation system and/or on the basis of signals from the radio authorisation system, in particular said at least one first analogue signal,
wherein the second transceiver and/or the second object is configured to
transmit said at least one release signal as part of said at least one second analogue data signal.

13. Radio authorisation system according to claim 12, comprising an access restriction device, wherein the access restriction device is configured to grant or deny access, in particular by means of an access restriction means, wherein the access restriction device is configured to deny access if the deviation of the actual values of the input signal is outside said at least one predetermined tolerance and/or to grant access if the deviation of the actual values of the input signal from the target relation is within said at least one predetermined tolerance.

14. Radio authorisation system according to one of claims 12 or 13, wherein the second transceiver is configured to transmit the enable signal to the first transceiver in such a way that, if the deviation of the actual values of the enable signal from the target relationship is within at least one predetermined tolerance.

## Revendications

1. Procédé pour décider de l'octroi d'une autorisation dans un système d'autorisation radio comprenant au moins un premier et un second objet, dans lequel la décision d'octroi d'une autorisation est fondée sur au moins un changement dans au moins un paramètre de signal au cours du temps d'un signal d'entrée (14) reçu au niveau dudit au moins un premier objet, et ledit au moins un paramètre de signal est une amplitude et/ou une phase, et/ou comprend, dans lequel le système d'autorisation radio est configuré pour transmettre une pluralité de symboles et/ou de puces avec un premier débit de symboles ou de puces dans au moins un premier signal de données analogiques codé du premier au second objet et/ou du second au premier objet, et pour provoquer la libération au moyen d'un signal de libération du second objet vers le premier objet,
dans lequel le signal de libération présente au moins un changement prédéterminé dans ledit au moins un paramètre de signal au fil du temps et est déterminé exclusivement sur la base de données prédéterminées dans le système d'autorisation radio et/ou sur la base de signaux provenant du système d'autorisation radio par le système d'autorisation radio et/ou fait partie dudit au moins un premier signal de données analogique, de sorte que, lors de la réception du signal d'entrée au niveau du premier objet, des échantillons dudit au moins un paramètre de signal du signal d'entrée reçu sont prélevés de telle sorte qu'au moins un premier échantillon (3) est prélevé à un premier instant et qu'un second échantillon (4) est prélevé à un second instant, en particulier à un intervalle de temps prédéterminé entre les premier et second instants, dans lequel ledit au moins un premier échantillonnage détermine au moins une première valeur réelle (15) pour ledit au moins un paramètre de signal et ledit au moins un second échantillonnage détermine au moins une seconde valeur réelle (15) pour ledit au moins un paramètre de signal,
au moins une relation cible (17) étant déterminée par le système d'autorisation radio exclusivement sur la base de données prédéterminées dans le système d'autorisation radio et/ou sur la base de signaux provenant du système d'autorisation radio, en particulier sur la base de la variation prédéterminée dudit au moins un paramètre de signal au cours du temps du signal de libération, et/ou
au moins un écart (19) étant déterminé en comparant (18) ladite au moins une première et ladite au moins une second valeur réelle avec ladite au moins une relation cible, et
a. le signal d'entrée reçu est évalué comme une attaque et/ou comme un signal étranger au système d'autorisation radio et/ou l'autorisation est refusée si ledit au moins un écart se situe en dehors d'une tolérance prédéterminée, et/ou
b. est évalué comme un signal provenant du système d'autorisation radio et/ou est reconnu par le système d'autorisation radio comme un signal d'autorisation et/ou l'autorisation est accordée si ledit au moins un écart se situe dans la tolérance prédéterminée,
dans lequel le second objet est configuré pour transmettre le signal de libération de telle sorte que ledit au moins un écart de ladite au moins une première et au moins une second valeur réelle du changement temporel dudit au moins un paramètre de signal, en particulier un signal de libération reçu au niveau du premier objet en tant que signal d'entrée, se situe dans la tolérance prédéterminée de ladite au moins une relation cible.

2. Procédé selon la revendication 1, dans lequel la relation cible est déterminée par une plage de valeurs cibles attendues, en particulier une valeur cible attendue.

3. Procédé selon la revendication 2, dans lequel la plage de valeurs cibles attendues, en particulier la valeur cible attendue, est une plage de valeurs cibles, en particulier une valeur cible, pour la second valeur réelle dudit au moins un paramètre de signal attendu dans ledit au moins un second échantillonnage, et/ou un rapport cible et/ou une différence cible et/ou un taux de variation cible entre ledit au moins un paramètre de signal dudit au moins un premier et dudit au moins un second échantillonnage, en particulier dans l'intervalle de temps entre les premier et second points dans le temps.

4. Procédé selon la revendication 3, dans lequel la plage de valeurs attendues cibles, en particulier la valeur attendue cible, est attribuée à ladite au moins une première valeur réelle par le système d'autorisation radio et/ou est déterminée/est déterminée sur la base de ladite au moins une valeur réelle.

5. Procédé selon la revendication 4, dans lequel la plage de valeurs cibles, en particulier la valeur cible, pour la seconde valeur réelle dudit au moins un paramètre de signal attendu dans ledit au moins un second échantillonnage est calculée à partir de la première valeur réelle au moyen du rapport cible et/ou de la différence cible et/ou du taux de variation cible, et en particulier, 1 , à des fins de comparaison, la plage de valeurs cibles calculée, en particulier la valeur cible, est comparée à la valeur réelle du second échantillonnage.

6. Procédé selon l'une des revendications précédentes, dans lequel une relation réelle du changement temporel dudit au moins un paramètre de signal du signal d'entrée reçu est déterminée à partir des première et seconde valeurs réelles et la relation réelle est comparée à la relation cible, dans lequel la relation réelle est déterminée en particulier comme un rapport réel ou une différence réelle entre ledit au moins un paramètre de signal dudit au moins un premier échantillonnage et ledit au moins un second échantillonnage, ou comme un taux de variation dans le temps dudit au moins un paramètre du signal d'entrée dans l'intervalle de temps entre les premier et second points dans le temps.

7. Procédé selon la revendication 6, dans la mesure où il se rapporte à la revendication 3, dans lequel, afin de comparer le rapport réel et le rapport cible, le rapport réel est comparé au rapport cible ou la différence réelle est comparée à la différence cible ou le taux de variation dans le temps est comparé au taux de variation cible.

8. Procédé selon l'une des revendications précédentes, dans lequel la détermination du rapport cible et/ou de la tolérance prédéterminée est fondée sur des données d'étalonnage pour ledit au moins un changement prédéterminé dans ledit au moins un paramètre de signal au cours du temps, dans lequel les données d'étalonnage proviennent d'une pluralité de signaux de libération mesurés,
dans laquelle, en particulier, un tableau de valeurs empiriques et/ou une fonction de valeurs empiriques est généré(e) sur le système d'autorisation radio sur la base des données d'étalonnage et est stocké(e) dans le système d'autorisation radio, et/ou
dans lequel, en particulier, les données d'étalonnage initiales provenant de la pluralité de signaux de libération mesurés sont complétées et/ou au moins partiellement remplacées par des données provenant de signaux de libération mesurés en tant que signaux d'entrée, en particulier en pondérant les données, notamment en fonction du moment où elles ont été générées.

9. Procédé selon la revendication 8, dans lequel au moins un paramètre statistique, en particulier la valeur moyenne, la médiane, le quartile, le quantile, l'intervalle de confiance, la plage de confiance, la variance et/ou l'écart type, est déterminé à partir des données d'étalonnage et les paramètres statistiques, en particulier la valeur moyenne, la médiane, le quartile, le quantile, l'intervalle de confiance, la plage de confiance, la variance et/ou l'écart type, sont utilisés pour déterminer la relation cible, en particulier telle que mentionnée dans la revendication 2, la plage de valeurs cibles attendues, en particulier la valeur cible attendue et/ou la tolérance prédéterminée.

10. Procédé selon l'une des revendications précédentes, dans lequel la tolérance prédéterminée est de 80 % ou moins de la variation du paramètre du signal au niveau du front du signal et/ou **caractérisé en ce que** les premier et second instants ont un intervalle de temps compris entre 1/16 et 1/4 de la période du signal radio et/ou compris entre 50 ns et 250 ns.

11. Procédé selon l'une des revendications précédentes, dans lequel une pluralité d'échantillons sont prélevés à partir du signal d'entrée reçu et deux de la pluralité d'échantillons sont chacun considérés comme une paire de premier et second échantillons, dans lequel les paires respectives sont chacune comparées à la relation cible, dans lequel les paires sont en particulier au moins partiellement décalées les unes par rapport aux autres dans le temps sur la durée du signal d'entrée, en particulier se suivent dans le temps et/ou se chevauchent, en particulier, le premier échantillonnage d'une second des paires correspond au second échantillonnage d'une première des paires et/ou
en particulier, l'approbation est refusée si l'écart de l'une des paires de la pluralité d'échantillons est en dehors de la tolérance prédéterminée.

12. Système d'autorisation radio avec un premier émetteur-récepteur dans et/ou sur un premier objet et un second émetteur-récepteur dans et/ou sur un second objet,
dans lequel le système d'autorisation radio est configuré pour transmettre une pluralité de symboles et/ou de puces codés à un premier débit de symboles ou de puces dans au moins un premier signal de données analogique du premier émetteur-récepteur vers le second émetteur-récepteur et pour transmettre une pluralité de symboles et/ou de puces codés à un second ou au premier débit de symboles ou de puces dans au moins un second signal de données analogique du second émetteur-récepteur vers le premier émetteur-récepteur,
dans lequel le système d'autorisation radio est configuré pour prélever des échantillons de valeurs réelles d'au moins un changement dans au moins un paramètre de signal au cours du temps d'un signal d'entrée reçu au premier émetteur-récepteur dans une communication radio entre les premier et second émetteurs-récepteurs, en particulier un second signal de données analogiques, et est en outre configuré pour comparer les valeurs réelles des échantillons avec au moins une relation cible afin de déterminer au moins un écart, dans lequel ledit au moins un paramètre de signal est et/ou comprend une amplitude et/ou une phase,
dans lequel le système d'autorisation radio est configuré pour
a. évaluer le signal d'entrée comme une attaque et/ou un signal étranger au système d'autorisation radio et/ou refuser l'autorisation si l'écart se situe en dehors d'au moins une tolérance prédéterminée et/ou
b. évaluer le signal d'entrée comme un signal du système d'autorisation radio et/ou le reconnaître comme un signal d'autorisation et/ou accorder l'autorisation si l'écart se situe dans ladite au moins une tolérance prédéterminée.
dans lequel le système d'autorisation radio est configuré pour déterminer la relation cible et/ou la tolérance prédéterminée exclusivement sur la base de données et/ou de signaux du système d'autorisation radio prédéterminés dans le système d'autorisation radio, en particulier sur la base d'un changement prédéterminé d'au moins un paramètre de signal au cours du temps d'un signal d'autorisation,
dans lequel le second émetteur-récepteur est configuré pour transmettre le signal de libération de telle sorte que l'écart d'au moins une première et d'au moins une second valeur réelle par rapport à ladite au moins une relation cible se situe dans la tolérance prédéterminée,
dans lequel le second émetteur-récepteur et/ou le second objet est configuré pour déterminer le signal de libération exclusivement sur la base de données prédéterminées dans le système d'autorisation radio et/ou sur la base de signaux provenant du système d'autorisation radio, en particulier ledit au moins un premier signal analogique,
dans lequel le second émetteur-récepteur et/ou le second objet est configuré pour
transmettre ledit au moins un signal de libération dans le cadre dudit au moins un second signal de données analogique.

13. Système d'autorisation radio selon la revendication 12, comprenant un dispositif de restriction d'accès, dans lequel le dispositif de restriction d'accès est configuré pour accorder ou refuser l'accès, en particulier au moyen d'un moyen de restriction d'accès, dans lequel le dispositif de restriction d'accès est configuré pour refuser l'accès si l'écart des valeurs réelles du signal d'entrée est en dehors de ladite au moins une tolérance prédéterminée et/ou pour accorder l'accès si l'écart des valeurs réelles du signal d'entrée par rapport à la relation cible est dans ladite au moins une tolérance prédéterminée.

14. Système d'autorisation radio selon l'une des revendications 12 ou 13, dans lequel le second émetteur-récepteur est configuré pour transmettre le signal d'activation au premier émetteur-récepteur de telle manière que, si l'écart des valeurs réelles du signal d'activation par rapport à la relation cible se situe dans au moins une tolérance prédéterminée.
